# EUROPEAN PATENT APPLICATION

(11) **EP 4 773 674 A1**
(43) Date of publication of application: **08.07.2026**
(21) Application number: 24868540.6
(22) Date of filing: 05.09.2024
(51) Int. Cl.: H04W 40/12, H04W 40/22, H04W 24/08, H04W 24/10, H04W 48/08, H04W 8/24, H04W 76/27, H04W 88/04

(54) **METHOD AND APPARATUS FOR SUPPORTING MULTI-PATH RELAY IN WIRELESS COMMUNICATION SYSTEM**

(30) Priority: 21.09.2023 KR 20230126642
(71) Applicant: Samsung Electronics Co., Ltd., Suwon-si, Gyeonggi-do 16677 (KR)
(72) Inventor: YU, Jeongseok, Suwon-si Gyeonggi-do 16677 (KR); KANG, Hyunjeong, Suwon-si Gyeonggi-do 16677 (KR)
(74) Representative: Nederlandsch Octrooibureau
(86) International application number: PCT/KR2024/013381
(87) International publication number: WO 2025/063561

(57) **Abstract**

The present disclosure relates to a 5G or 6G communication system for supporting a higher data transmission rate. More specifically, the present disclosure provides a method performed by a first terminal in a wireless communication system, the method comprising the steps of: receiving, from a second terminal, a signal for measuring a sidelink with the second terminal; and transmitting, to the second terminal or a base station, a measurement report including a result of measurement based on the signal, wherein the measurement report may include information indicating a measurement unit on which the result of the measurement is based.

## Description

### [Technical Field]

The present disclosure relates to a wireless communication system and, more particularly, to a method and an apparatus for using a multi-path relay in a wireless communication system.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz (THz) bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

### [Disclosure of Invention]

### [Technical Problem]

The disclosure provides a method and an apparatus for supporting a multi-path relay in a wireless communication system, thereby providing a multi-path relay service.

The technical subjects pursued in the disclosure may not be limited to the above-mentioned technical subjects, and other technical subjects which are not mentioned herein may be clearly understood from the following description by those skilled in the art to which the disclosure pertains.

### [Solution to Problem]

The disclosure provides a method performed by a first terminal in a wireless communication system, the method including: receiving, from a second terminal, a signal for measurement regarding a sidelink with the second terminal; and transmitting, to the second terminal or a base station, a measurement report including a result of the measurement based on the signal, wherein the measurement report may include information indicating a measurement unit based on which the result of the measurement is based.

In addition, the disclosure provides a method performed by a second terminal in a wireless communication system, the method including: transmitting, to a first terminal, a signal for measurement regarding a sidelink with the first terminal; and receiving, from the first terminal, a measurement report including a result of the measurement based on the signal, wherein the measurement report may include information indicating a measurement unit on which the result of the measurement is based.

In addition, the disclosure provides a first terminal in a wireless communication system, the first terminal including: a transceiver; and a controller connected to the transceiver, wherein the controller is configured to: receive, from a second terminal, a signal for measurement regarding a sidelink with the second terminal; and transmit, to the second terminal or a base station, a measurement report including a result of the measurement based on the signal, wherein the measurement report may include information indicating a measurement unit based on which the result of the measurement is based.

In addition, the disclosure provides a second terminal in a wireless communication system, the second terminal including: a transceiver; and a controller connected to the transceiver, wherein the controller is configured to: transmit, to a first terminal, a signal for measurement regarding a sidelink with the first terminal; and receive, from the first terminal, a measurement report including a result of the measurement based on the signal, wherein the measurement report may include information indicating a measurement unit on which the result of the measurement is based.

### [Advantageous Effects of Invention]

According to an embodiment of the disclosure, an apparatus and a method capable of effectively providing services in a wireless communication system can be provided.

Advantageous effects obtainable from the disclosure may not be limited to the above-mentioned effects, and other effects which are not mentioned herein may be clearly understood from the following description by those skilled in the art to which the disclosure pertains.

### [Brief Description of Drawings]

FIG. 1 illustrates a structure of a next-generation mobile communication system according to an embodiment of the disclosure.
FIG. 2 illustrates a user plane radio protocol structure of a next-generation mobile communication system according to an embodiment of the disclosure.
FIG. 3 illustrates a control plane radio protocol structure of a next-generation mobile communication system according to various embodiments of the disclosure.
FIG. 4 illustrates a structure of a base station in a wireless communication system according to an embodiment of the disclosure.
FIG. 5 illustrates a structure of a UE in a wireless communication system according to an embodiment of the disclosure.
FIG. 6A illustrates examples of scenarios of sidelink communication in a wireless communication system according to various embodiments of the disclosure.
FIG. 6B illustrates examples of scenarios of sidelink communication in a wireless communication system according to various embodiments of the disclosure.
FIG. 6C illustrates examples of scenarios of sidelink communication in a wireless communication system according to various embodiments of the disclosure.
FIG. 6D illustrates examples of scenarios of sidelink communication in a wireless communication system according to various embodiments of the disclosure.
FIG. 6E illustrates examples of scenarios of sidelink communication in a wireless communication system according to various embodiments of the disclosure.
FIG. 7A illustrates examples of transmission schemes of sidelink communication in a wireless communication system according to various embodiments of the disclosure.
FIG. 7B illustrates examples of transmission schemes of sidelink communication in a wireless communication system according to various embodiments of the disclosure.
FIG. 8 illustrates an example of a sidelink resource pool in a wireless communication system according to an embodiment of the disclosure.
FIG. 9 illustrates an example of signal flow for allocating a sidelink transmission resource in a wireless communication system according to an embodiment of the disclosure.
FIG. 10 illustrates another example of signal flow for allocating a sidelink transmission resource in a wireless communication system according to an embodiment of the disclosure.
FIG. 11 is a diagram illustrating an example of a channel structure of a slot used for sidelink communication in a wireless communication system according to an embodiment of the disclosure.
FIG. 12A is a diagram illustrating a user plane radio protocol structure of a multi-path UE-network relay according to an embodiment of the disclosure.
FIG. 12B is a diagram illustrating a control plane radio protocol structure of a multi-path UE-network relay according to an embodiment of the disclosure.
FIG. 12C is a diagram illustrating a user plane radio protocol structure of a multi-path UE-network relay using UE-to-UE communication not defined in 3GPP according to an embodiment of the disclosure.
FIG. 12D is a diagram illustrating a control plane radio protocol structure of a multi-path UE-network relay using UE-to-UE communication not defined in 3GPP according to an embodiment of the disclosure.
FIG. 13A is a diagram illustrating a signal flow for transmitting a threshold condition of a multi-path UE-network relay according to an embodiment of the disclosure to a relay UE.
FIG. 13B is a flowchart for determining whether a UE satisfies a threshold condition of a multi-path UE-network relay according to an embodiment of the disclosure.
FIG. 13C is a flowchart for determining whether a UE satisfies a threshold condition of a multi-path UE-network relay according to an embodiment of the disclosure.
FIG. 14A is a diagram illustrating a signal flow for transmitting a threshold condition of a multi-path UE-network relay to a remote UE according to an embodiment of the disclosure.
FIG. 14B is a flowchart for determining whether a UE satisfies a threshold condition of a multi-path UE-network relay according to an embodiment of the disclosure.
FIG. 15 is a flowchart illustrating a UE using a threshold for a multi-path UE-network relay operation according to an embodiment of the disclosure.
FIG. 16 is a flowchart illustrating a UE performing measurement and measurement reporting in a multi-path UE-network relay according to an embodiment of the disclosure.
FIG. 17 is a flowchart illustrating a UE performing measurement and measurement reporting in a multi-path UE-network relay according to an embodiment of the disclosure.
FIG. 18 is a flowchart illustrating a UE selecting or reselecting a relay UE during a multi-path UE-network relay operation according to an embodiment of the disclosure.
FIG. 19 is a flowchart illustrating a UE reporting an indirect path failure to a base station during a multi-path UE-network relay operation according to an embodiment of the disclosure.

### [Mode for the Invention]

Hereinafter, embodiments of the disclosure will be described in detail with reference to the accompanying drawings.

In describing the embodiments, descriptions related to technical contents well-known in the relevant art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Also, the size of each element does not completely reflect the actual size thereof. In the respective drawings, the same or corresponding elements are assigned the same reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the disclosure, the same or like reference numerals designate the same or like elements. Furthermore, in describing the disclosure, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

The following detailed description of embodiments of the disclosure is mainly directed to New RAN (NR) as a radio access network and Packet Core (5G system or 5G core network or next generation core (NG Core)) as a core network in the 5G mobile communication standards specified by the 3rd generation partnership project (3GPP) that is a mobile communication standardization group, but based on determinations by those skilled in the art, the main idea of the disclosure may be applied to other communication systems having similar backgrounds through some modifications without significantly departing from the scope of the disclosure.

In the following description, some of terms and names defined in the 3GPP standards (standards for 5G, NR, LTE, or similar systems) may be used for the sake of descriptive convenience. However, the disclosure is not limited by these terms and names, and may be applied in the same way to systems that conform other standards.

In the following description, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as used herein, and other terms referring to subjects having equivalent technical meanings may be used.

In the following description, a base station is an entity that allocates resources to terminals, and may be at least one of a gNode B, an eNode B, a Node B, a base station (BS), a wireless access unit, a base station controller, and a node on a network. A terminal may include a user equipment (UE), a mobile station (MS), a cellular phone, a smartphone, a computer, or a multimedia system capable of performing a communication function. In the disclosure, a "downlink (DL)" refers to a radio link via which a base station transmits a signal to a terminal, and an "uplink (UL)" refers to a radio link via which a terminal transmits a signal to a base station.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

5G mobile communication technologies define broad frequency bands to enable high transmission rates and new services, and can be implemented not only in "Sub 6GHz" bands such as 3.5GHz, but also in ultrahigh frequency ("Above 6GHz") bands referred to as mmWave such as 28GHz and 39GHz. In addition, it has been considered to implement 6G mobile communication technologies (referred to as Beyond 5G systems) in terahertz bands (e.g., 95GHz to 3THz bands) in order to accomplish transmission rates fifty times faster than 5G mobile communication technologies and ultra-low latencies one-tenth of 5G mobile communication technologies.

In the initial stage of 5G mobile communication technologies, in order to support services and to satisfy performance requirements in connection with enhanced Mobile BroadBand (eMBB), Ultra Reliable & Low Latency Communications (URLLC), and massive Machine-Type Communications (mMTC), there has been ongoing standardization regarding beamforming and massive MIMO for alleviating radio-wave path loss and increasing radio-wave transmission distances in mmWave, numerology (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large-capacity data transmission and a polar code for highly reliable transmission of control information, L2 pre-processing, and network slicing for providing a dedicated network customized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to-everything (V2X) for aiding driving determination by autonomous vehicles based on information regarding positions and states of vehicles transmitted by the vehicles and for enhancing user convenience, New Radio Unlicensed (NR-U) aimed at system operations conforming to various regulation-related requirements in unlicensed bands, NR UE Power Saving, Non-Terrestrial Network (NTN) which is UE-satellite direct communication for securing coverage in an area in which communication with terrestrial networks is unavailable, and positioning.

Moreover, there has been ongoing standardization in wireless interface architecture/protocol fields regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service fields regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

If such 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting Augmented Reality (AR), Virtual Reality (VR), Mixed Reality (MR), etc., 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for securing coverage in terahertz bands of 6G mobile communication technologies, Full Dimensional MIMO (FD-MIMO), multi-antenna transmission technologies such as array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

Hereinafter, the disclosure relates to a method and a device for supporting a multi-path (MP) relay, wherein a direct path and an indirect path are used simultaneously in a UE-to-network (U2N) relay. Specifically, the multi-path relay may be configured by a UE capable of operating as a relay UE in the multi-path relay, a UE capable of operating as a remote UE in the multi-path relay, and a base station supporting the multi-path relay. A multi-path remote UE may communicate with the base station through a multi-path relay, and the UE-UE link and the UE-base station link that support such data flows may be collectively referred to as an indirect path. In addition, the multi-path remote UE may communicate directly with the base station, and a UE-base station link for direct communication may be called a direct path. The base station may control multi-path operations by adding, modifying, and deleting indirect paths and direct paths for a multi-path remote UE. The base station may configure differently a threshold condition to be used in U2N and a threshold condition to be used in MP, thereby controlling operations of the multi-path remote UE and the multi-path relay UE. The base station may transmit an instruction for configuring MP operations for the purpose of controlling a UE to which a threshold condition available for use in the MP is to be applied, to the multi-path remote UE and the multi-path relay UE. The base station may configure the multi-path remote UE and the multi-path relay UE to report measurement results regarding a surrounding base station or a surrounding UE periodically, or if a specific condition is satisfied, for the purpose of controlling the indirect path and the direct path. The base station may configure the unit (e.g., SL-RSRP or SD-RSRP) to be measured for the UE, and the UE may explicitly notify the base station of the configured unit to be measured, in the measurement result report. The base station may not perform relay UE selection or reselection of the multi-path remote UE for the purpose of managing the direct path or indirect path of the multi-path remote UE. The multi-path remote UE may notify the base station of whether to use the UE-UE link according to an upper layer indication.

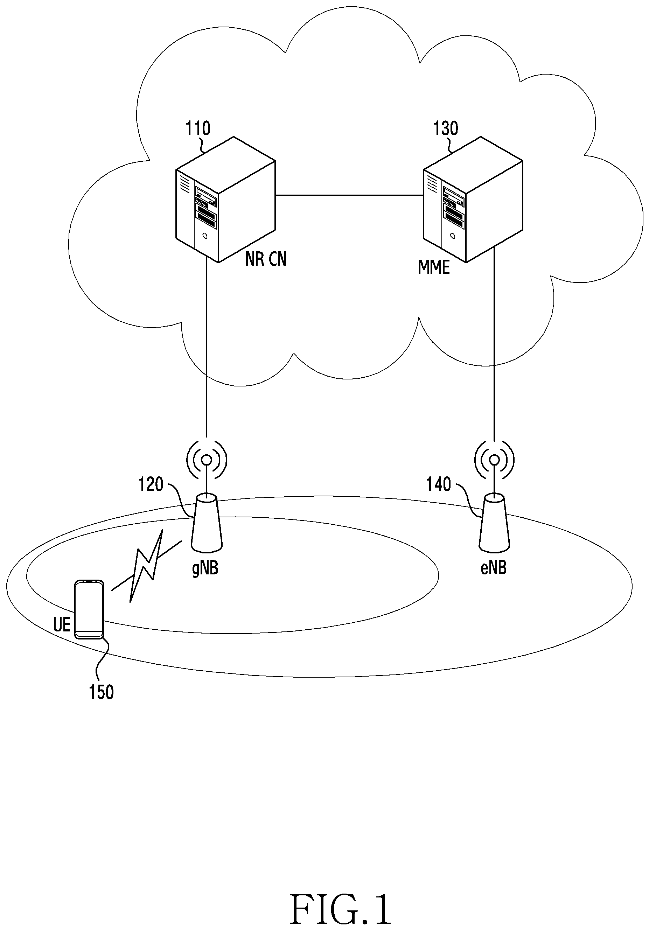

FIG. 1 illustrates a structure of a next-generation mobile communication system according to an embodiment of the disclosure.

Referring to FIG. 1, a radio access network of a next-generation mobile communication system (hereinafter NR or 5G) may include a next-generation base station (new radio node B, hereinafter NR gNB, gNB, or base station) 120, and a new radio core network (NR CN) 110. A user terminal (new radio user equipment, hereinafter NR UE or terminal) 150 may access an external network via the NR gNB 120 and the NR CN 110.

In FIG. 1, the NR gNB 120 may correspond to an eNB 140 of an LTE system. The NR gNB 120 may be connected to the NR UE 150 through a radio channel and provide outstanding services as compared to the eNB 140. In the next-generation mobile communication system, since all user traffic is serviced through a shared channel, a device that collects state information, such as buffer statuses, available transmit power states, and channel states of UEs, and performs scheduling accordingly is required, and the NR gNB 120 may serve as the device. In general, one NR gNB 120 may control multiple cells. In order to implement ultrahigh-speed data transfer beyond LTE, a wider bandwidth than the maximum bandwidth of LTE may be used, an orthogonal frequency division multiplexing (OFDM) scheme may be employed as a radio access technology, and a beamforming technology may be additionally integrated therewith. Furthermore, an adaptive modulation and coding (AMC) scheme for determining a modulation scheme and a channel coding rate according to a channel state of a UE may be employed. The NR CN 110 may perform functions such as mobility support and QoS configuration. The NR CN 110 is a device responsible for various control functions as well as a mobility management function for a UE, and may be connected to multiple base stations. In addition, the next-generation mobile communication system may interwork with the existing LTE system, and the NR CN 110 may be connected to an MME 130 via a network interface. The MME 130 may be connected to the eNB 140.

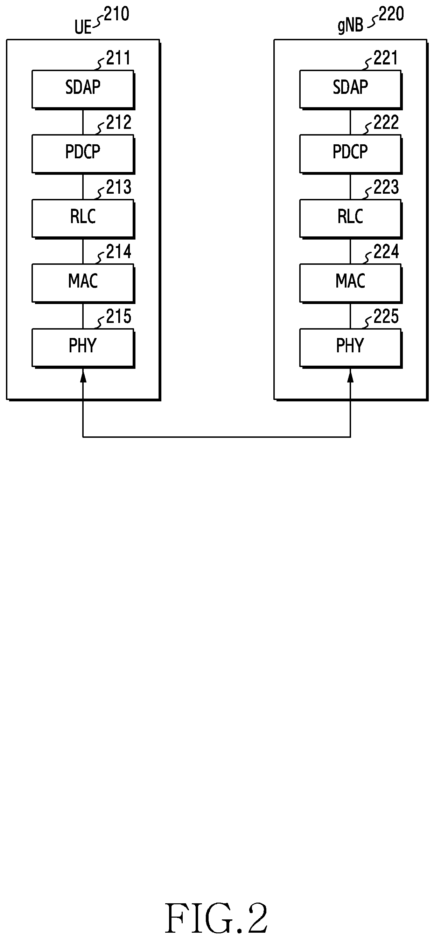

FIG. 2 illustrates a user plane radio protocol structure of a next-generation mobile communication system according to an embodiment of the disclosure.

Referring to FIG. 2, on a UE 210 side, a user plane radio protocol of a next-generation mobile communication system may include an SDAP 211, a PDCP 212, an RLC 213, an MAC 214, and/or a PHY 215. On a gNB 220 side, a user plane radio protocol of a next-generation mobile communication system may include an SDAP 221, a PDCP 222, an RLC 223, an MAC 224, and/or a PHY 225. In the disclosure, the expression "may include " may be replaced with the expression "may be configured by". For example, on a UE 210 side, a user plane radio protocol of a next-generation mobile communication system may consist of an SDAP 211, a PDCP 212, an RLC 213, an MAC 214, and/or a PHY 215.

The functions of the SDAP 211 or 221 may include at least some of functions below. However, the disclosure is not limited thereto.
- Mapping between a quality of service (QoS) flow and a data radio bearer
- Marking QoS flow ID (QFI) in both DL and UL packets

The main functions of the PDCP 212 or 222 may include some of functions below. However, the disclosure is not limited thereto.
- Transfer of data (user plane or control plane)
- Maintenance of PDCP sequence numbers (SNs)
- Header compression and decompression using ROHC protocol
- Header compression and decompression using EHC protocol
- Compression and decompression of uplink PDCP SDUs: DEFLATE based UDC only
- Ciphering and deciphering
- Integrity protection and integrity verification)
- Timer based SDU discard
- Routing for split bearers
- Duplication
- Reordering and in-order delivery
- Out-of-order delivery
- Duplicate discarding

The main functions of the RLC 213 or 223 may include some of functions below. However, the disclosure is not limited thereto.
- Transfer of upper layer PDUs
- Sequence numbering independent of the one in PDCP (UM and AM)
- Error correction through ARQ (AM only)
- Segmentation (AM and UM) and re-segmentation (AM only) of RLC SDUs
- Reassembly of SDU (AM and UM)
- Duplicate detection (AM only)
- RLC SDU discard (AM and UM)
- RLC re-establishment
- Protocol error detection (AM only)

The main functions of the MAC 214 or 224 may include some of functions below. However, the disclosure is not limited thereto.
- Mapping between logical channels and transport channels
- Multiplexing of MAC SDUs from one or different logical channels onto transport blocks (TBs) to be delivered to physical layer on transport channels
- Demultiplexing of MAC SDUs to one or different logical channels from transport blocks (TBs) delivered from physical layer on transport channels
- Scheduling information reporting
- Error correction through HARQ
- Logical channel prioritization
- Priority handling between overlapping resources of one UE

The PHY layer 215 or 225 may perform channel coding and modulation of upper layer data to generate OFDM symbols and may convert the OFDM symbols into an RF signal and then transmit the same through an antenna, In addition, the PHY layer 215 or 225 may perform demodulation and channel decoding of the received OFDM symbols and then transfer the OFDM symbols to an upper layer.

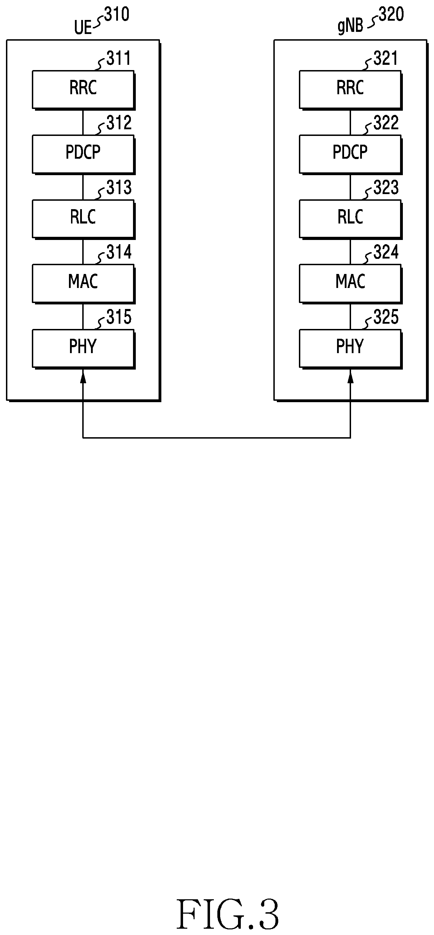

FIG. 3 illustrates a control plane radio protocol structure of a next-generation mobile communication system according to various embodiments of the disclosure.

Referring to FIG. 3, on a UE 310 side, a control plane radio protocol of a next generation mobile communication system may include a radio resource control (RRC) 311, a PDCP 312, an RLC 313, an MAC 314, and/or a PHY 315. On a gNB 320 side, a control plane radio protocol of a next generation mobile communication system may include an RRC 321, a PDCP 322, an RLC 323, an MAC 324, and/or a PHY 325.

The functions of the RRC 311 or 312 may include at least some of functions below.
- Broadcast of system information related to AS and NAS
- Paging initiated by 5GC or NG-RAN
- Establishment and management of RRC connection between UE and NG-RAN, and addition, modification, and release of carrier aggregation and of dual-connectivity between NRs or between NR and LTE (establishment, maintenance, and release of an RRC connection between the UE and NG-RAN including: addition, modification and release of carrier aggregation; addition, modification, and release of dual connectivity in NR or between E-UTRA and NR.
- Security functions including key management
- Establishment, configuration, maintenance, and release of signaling radio bearers (SRBs) and data radio bearers (DRBs)
- UE mobility support (mobility functions including: handover and context transfer; UE cell selection and reselection and control of cell selection and reselection; inter-RAT mobility.
- QoS management functions
- UE measurement reporting and control of the reporting
- Detection of and recovery from radio link failure
- NAS message transmission (NAS message transfer to/from NAS from/to UE)

The main functions of the PDCP 312 or 322, RLC 313 or 323, MAC 314 or 324, and/or PHY 315 or 325 may follow the example of FIG. 2.

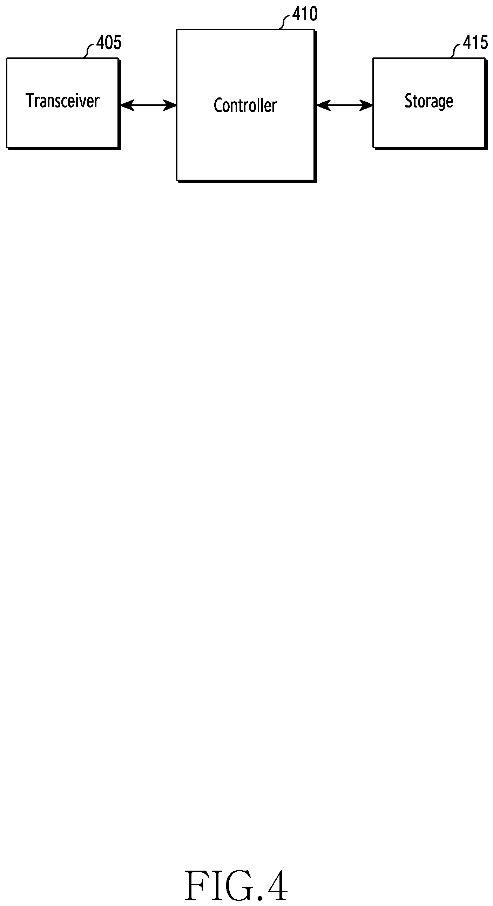

FIG. 4 illustrates a structure of a base station according to an embodiment of the disclosure.

Referring to FIG. 4, the base station may include a transceiver 405, a controller 410, and a storage 415. The transceiver 405, the controller 410, and the storage 415 may be operated according to the above-described communication methods of the base station. A network device may also correspond to the structure of the base station. However, components of the base station are not limited to the above-described example. For example, the base station may include a larger or smaller number of components than the above-described components. For example, the base station may include the transceiver 405 and the controller 410. Furthermore, the transceiver 405, the controller 410, and the storage 415 may be implemented in the form of a single chip.

The transceiver 405 refers to a base station receiver and a base station transmitter as a whole, and may transmit/receive signals with UEs, other base stations, and other network devices. The transmitted/received signals may include control information and data. The transceiver 405 may transmit, for example, system information, synchronization signals, or reference signals to UEs. To this end, the transceiver 405 may include an RF transmitter configured to up-convert and amplify the frequency of transmitted signals, an RF receiver configured to low-noise-amplify received signals and down-convert the frequency thereof, and the like. However, this is only an embodiment of the transceiver 405, and the components of the transceiver 405 are not limited to the RF transmitter and the RF receiver. The transceiver 405 may include wired/wireless transceivers, and may include various components for transmitting/receiving signals. In addition, the transceiver 405 may receive signals through a communication channel (e.g., a radio channel), output the same to the controller 410, and transmit signals output from the controller 410 through the communication channel. Furthermore, the transceiver 405 may receive communication signals, output same to a processor, and transmit signals output from the processor to UEs, other base stations, or other network entities through a wired/wireless network.

The storage 415 may store programs and data necessary for operations of the base station. In addition, the storage 415 may store control information or data included in signals acquired by the base station. The storage 415 may include storage media such as a ROM, a RAM, a hard disk, a CD-ROM, and a DVD, or a combination of storage media. In addition, the storage 415 may store at least one of information transmitted/received through the transceiver 405 and information generated through the controller 410.

As used herein, the controller 410 may be defined as a circuit, an application specific integrated circuit, or at least one processor. The processor may include a communication processor (CP) which performs control for communication and an application processor (AP) which controls upper layers such as application programs. The controller 410 may control the overall operation of the base station according to the embodiments proposed in the disclosure. For example, the controller 410 may control signal flows between the respective blocks to perform the operations according to the above-described flowcharts.

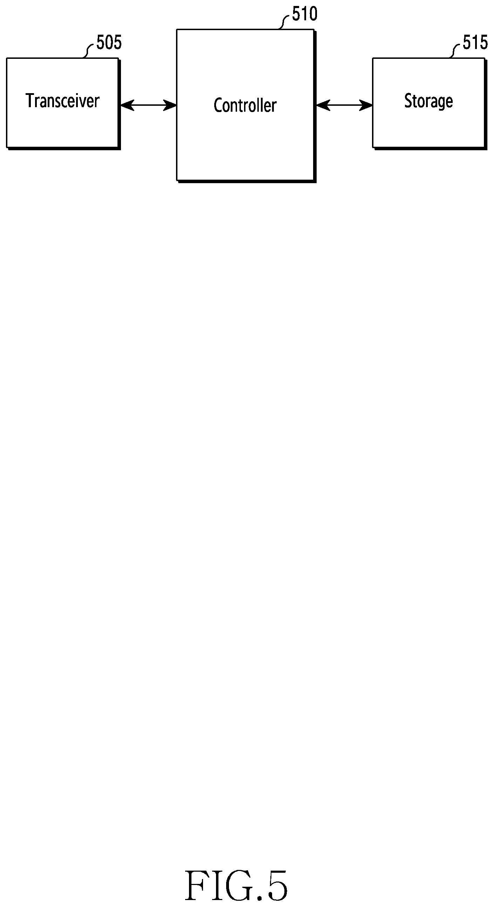

FIG. 5 illustrates a structure of a UE according to an embodiment of the disclosure.

Referring to FIG. 5, the UE may include a transceiver 505, a controller 510, and a storage 515. The transceiver 505, the controller 510, and the storage 515 may be operated according to the above-described communication methods of the UE. However, components of the UE are not limited to the above-described example. For example, the UE may include a larger or smaller number of components than the above-described components. For example, the UE may include the transceiver 505 and the controller 510. Furthermore, the transceiver 505, the controller 510, and the storage 515 may be implemented in the form of a single chip.

The transceiver 505 refers to a UE receiver and a UE transmitter as a whole, and may transmit/receive signals with base stations, other UEs, or network entities. The signals transmitted/received with base stations may include control information and data. The transceiver 505 may receive, for example, system information, synchronization signals, or reference signals from the base station. To this end, the transceiver 505 may include an RF transmitter configured to up-convert and amplify the frequency of transmitted signals, an RF receiver configured to low-noise-amplify received signals and down-convert the frequency thereof, and the like. However, this is only an embodiment of the transceiver 505, and the components of the transceiver 505 are not limited to the RF transmitter and the RF receiver. Also, the transceiver 505 may include wired/wireless transceivers, and may include various components for transmitting/receiving signals. In addition, the transceiver 505 may receive signals through a radio channel, output the same to the controller 510, and transmit signals output from the controller 510 through the radio channel. Furthermore, the transceiver 505 may receive communication signals, output same to a processor, and transmit signals output from the processor to network entities through a wired/wireless network.

The storage 515 may store programs and data necessary for operations of the UE. In addition, the storage 515 may store control information or data included in signals acquired by the UE. The storage 515 may include storage media such as a ROM, a RAM, a hard disk, a CD-ROM, and a DVD, or a combination of storage media.

As used herein, the controller 510 may be defined as a circuit, an application specific integrated circuit, or at least one processor. The processor may include a communication processor (CP) which performs control for communication and an application processor (AP) which controls upper layers such as application programs. The controller 510 may control the overall operation of the UE according to the embodiments proposed in the disclosure. For example, the controller 510 may control signal flows between the respective blocks to perform operations according to the above-described flowcharts.

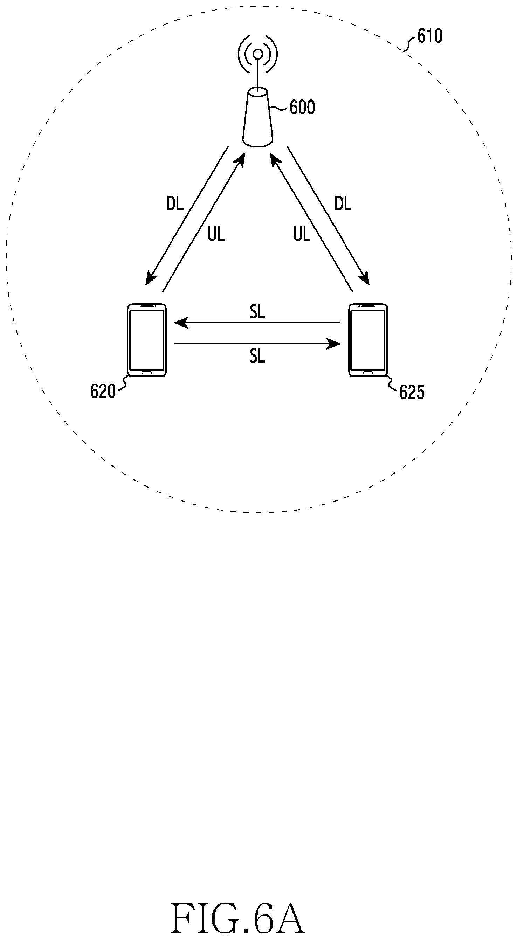

FIG. 6A to FIG. 6E are diagrams illustrating examples of scenarios regarding sidelink communication in a wireless communication system according to an embodiment of the disclosure.

FIG. 6A illustrates an in-coverage (IC) scenario in which sidelink UEs 620 and 625 are located within the coverage 610 of a base station 600.

Referring to FIG. 6A, the sidelink UEs 620 and 625 may receive data and control information through the downlink (DL) from the base station 600 or may transmit data and control information through the uplink (UL) to the base station 600. The data and control information may be data and control information for sidelink communication, or may be data and control information for general cellular communication other than sidelink communication. In addition, the sidelink UEs 620 and 625 may transmit and receive data and control information for sidelink communication through the sidelink. In addition, the first UE 620 may receive data and control information from the base station 600 along a direct path (through the DL or UL), or may receive data and control information from the base station 600 along an indirect path (through relay of the second UE 625). The first UE 620 may be referred to as a remote UE, and the second UE 625 may be referred to as a relay UE. A scenario in which the first UE 620 accesses the base station 600 through the second UE 625 may be referred to as a UE-to-network (U2N) relay. In addition, the first UE 620 may transmit/receive data and control information to/from the base station 600 by using the direct path and the indirect path at the same time, and such a scenario may be referred to as a multi-path relay.

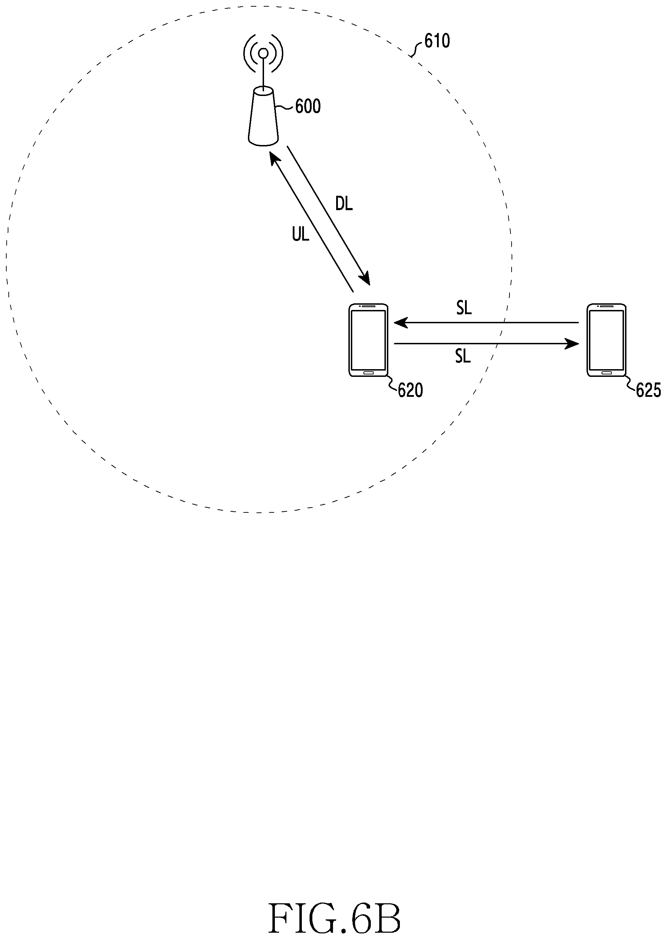

FIG. 6B illustrates a case of partial coverage (PC) in which the first UE 620 among sidelink UEs is located within the coverage 610 of the base station 600, and the second UE 625 is located outside the coverage 610 of the base station 600.

Referring to FIG. 6B, the first UE 620 located within the coverage 610 of the base station 600 may receive data and control information from the base station 600 through the downlink, or may transmit data and control information to the base station 600 through the uplink. The second UE 625 located outside the coverage of the base station 600 may not directly receive data and control information from the base station 600 through the downlink, and may not directly transmit data and control information to the base station 600 through the uplink. The second UE 625 may transmit and receive data and control information for sidelink communication to and from the first UE 620 through the sidelink.

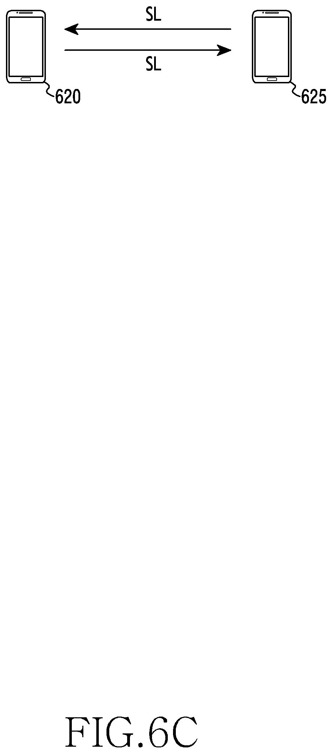

FIG. 6C illustrates an example of a case in which sidelink UEs (e.g., the first UE 620 and the second UE 625) are located outside of the coverage of the base station 600 (out-of-coverage (OOC)).

Referring to FIG. 6C, the first UE 620 and the second UE 625 may not receive data and control information from the base station through the downlink, and may not transmit data and control information to the base station through the uplink. The first UE 620 and the second UE 625 may transmit and receive data and control information for sidelink communication through the sidelink.

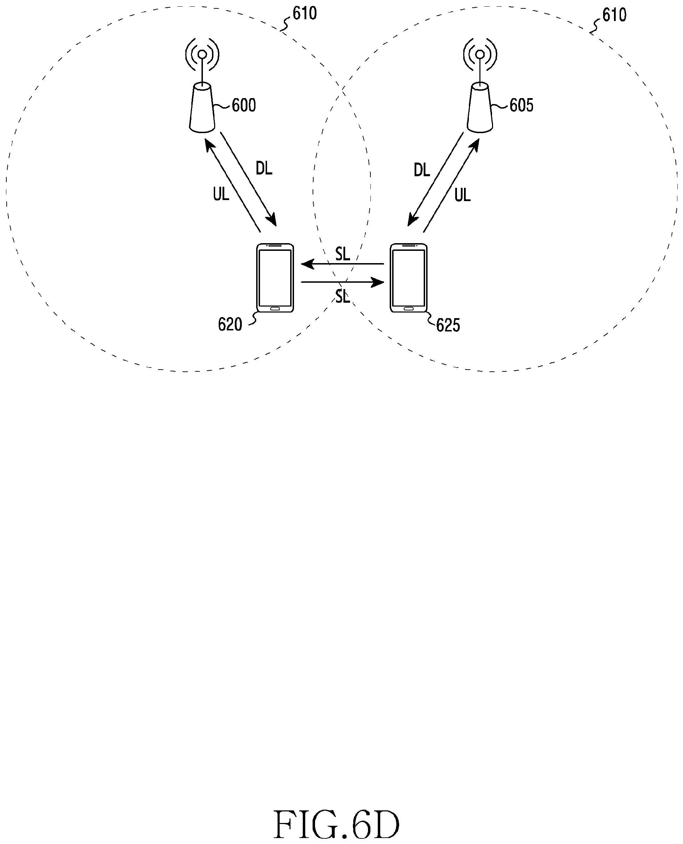

FIG. 6D illustrates a case where the first UE 620 and the second UE 625 that perform sidelink communication are connected to different base stations (e.g., the first base station 600 and the second base station 605) (e.g., RRC connected state) or are camping thereon (i.e., RRC disconnected state, that is, RRC idle or inactive state), and perform inter-cell sidelink communication. Referring to FIG. 6D, the first UE 620 may be a sidelink transmitting UE, and the second UE 625 may be a sidelink receiving UE. Alternatively, the first UE 620 may be a sidelink receiving UE, and the second UE 625 may be a sidelink transmitting UE. The first UE 620 may receive a sidelink-dedicated system information block (SIB) from the base station 600 to which the first UE 620 is connected (or on which the first UE 620 is camping), and the second UE 625 may receive a sidelink-dedicated SIB from a different base station 605 to which the second UE 625 is connected (or on which the second UE 625 is camping). Information of the sidelink-dedicated SIB received by the first UE 620 and information of the sidelink-dedicated SIB received by the second UE 625 may be different from each other. Therefore, in order to perform sidelink communication between UEs located in different cells, it may be additionally necessary to unify information or to add a method for assuming and interpreting the same. In addition, the first UE 620 may receive data and control information from the first base station 600 along a direct path through the DL or UL, or may receive data and control information from the second base station 605 along an indirect path through relay of the second UE 625. The first UE 620 may be referred to as a remote UE, and the second UE 625 may be referred to as a relay UE. The scenario in which the first UE 620 accesses the second base station 605 through the second UE 625 may be referred to as a UE-network relay. In addition, the first UE 620 may transmit/receive data and control information to/from the first base station 600 and the second base station 605 by using the direct path and the indirect path at the same time, and this scenario may be called a multi-path relay.

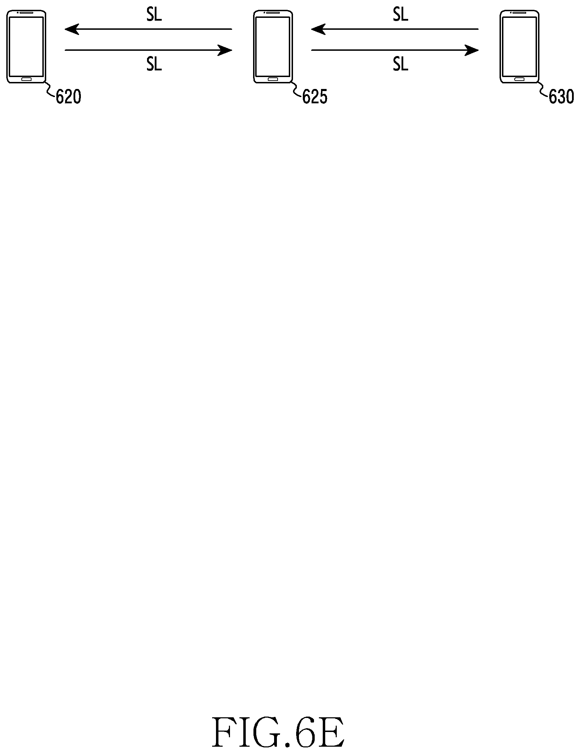

FIG. 6E illustrates a case in which a first UE 620 and a second UE 625, and a third UE 630 perform sidelink communication by configuring a UE-to-UE relay. Referring to FIG. 6E, the first UE 620 may be a source end UE which is an end UE of the UE-to-UE relay, and the third UE 630 may be a target end UE which is an end UE of the UE-to-UE relay. Alternatively, the first UE 620 may be a target end UE which is an end UE of the UE-to-UE relay, and the third UE 630 may be a source end which is an end UE of the UE-to-UE relay. The second UE 625 may be a relay UE that relays data between end UEs of the UE-to-UE relay. As in the examples of FIG. 6A to FIG. 6D, the first UE 620, the second UE 625, and the third UE 630 may be in one of all possible combinations of the following: a case where they are connected to identical or different base stations (e.g., RRC connected state) or are or camping thereon (e.g., RRC disconnected state, that is, RRC idle or inactive state), a case where they perform inter-cell sidelink communication, and a case of OOC.

Although the examples in FIG. 6A to FIG. 6E have been described with reference to a sidelink system configured by two or three UEs (e.g., the first UE 620, the second UE 625, and the third UE 630) for the sake of convenience in description, the disclosure is not limited thereto, and may also be applied to a sidelink system in which three or more UEs participate. In addition, the uplink and downlink between the base station 600 and the sidelink UEs may be referred to as a Uu interface, and the sidelink between the sidelink UEs may be referred to as a PC5 interface. In addition, a sidelink UE located in OOC having no Uu interface connected to the base station 600 may indirectly receive data and control information from the base station 600 through the relay of another sidelink UE located in IC having a Uu interface connected to the base station 600. In the following description, the uplink or downlink and Uu interface may be used interchangeably, and the sidelink and PC5 interface may be used interchangeably.

Meanwhile, in the disclosure, a UE may refer to a vehicle that supports vehicular-to-vehicular (V2V) communication, a vehicle or a pedestrian's handset (e.g., a smartphone) that supports vehicular-to-pedestrian (V2P) communication, a vehicle that supports vehicular-to-network (V2N) communication, or a vehicle that supports vehicular-to-infrastructure (V2I) communication. In addition, in the disclosure, a UE may refer to a road side unit (RSU) having a UE function, an RSU having a base station function, or an RSU having a part of the base station function and a part of the UE function. In addition, the same may refer to a UE supporting a proximity service (ProSe) and a UE-to-UE relay using the proximity service (e.g., an end UE of the UE-to-UE relay or a relay UE thereof) or a UE-to-network relay (e.g., a remote UE of the UE-to-network relay or a relay UE thereof).

In addition, in the disclosure, the base station may refer to a base station that supports both sidelink and general cellular communication, or a base station that supports only sidelink. The base station may be a 5G gNB, a 4G eNB, or an RSU. Therefore, in the disclosure, a base station may also be referred to as an RSU.

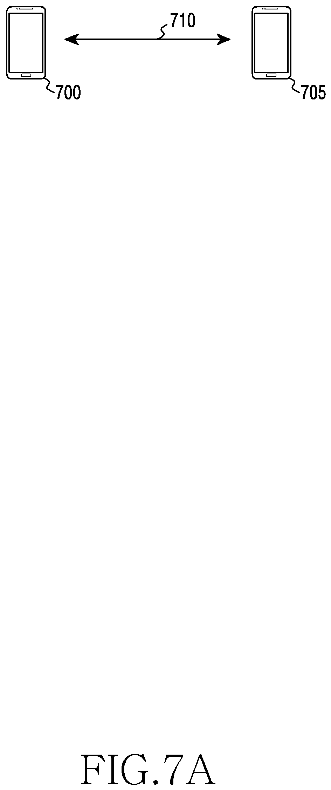

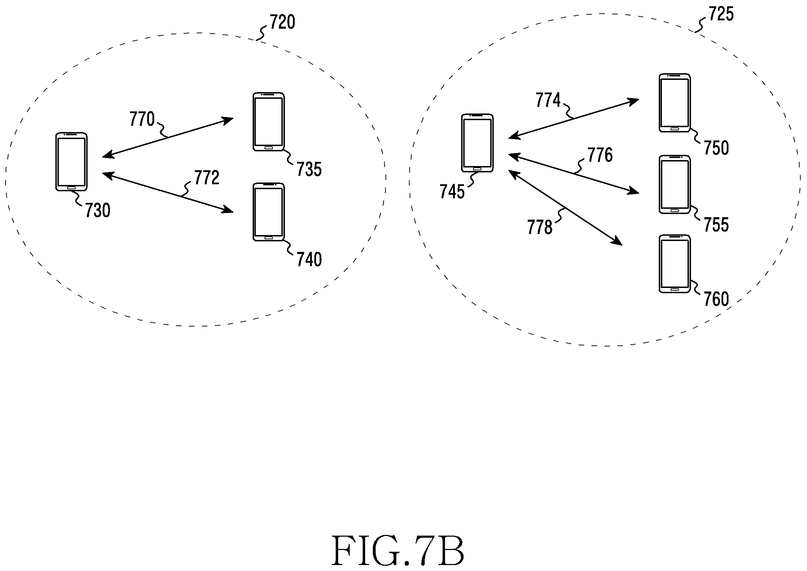

FIG. 7A and FIG. 7B illustrate examples of transmission schemes for sidelink communication in a wireless communication system according to an embodiment of the disclosure. FIG. 7A illustrates a unicast scheme, and FIG. 7B illustrates a groupcast scheme.

Referring to FIG. 7A, the transmitting UE 700 and the receiving UE 705 may perform one-to-one communication 710. A transmission scheme as in FIG. 7A may be referred to as unicast communication.

Referring to FIG. 7B, the transmitting UEs 730 and 745 may perform one-to-many communication with the receiving UEs 735, 740, 750, 755, and 760. A transmission scheme as in FIG. 7B may be referred to as groupcasting or multicasting.

In FIG. 7B, the first UE 730, the second UE 735, and the third UE 740 may form one group to perform groupcast communication, and the fourth UE 745, the fifth UE 750, the sixth UE 755, and the seventh UE 760 may form another group to perform groupcast communication. The UEs may perform groupcast communication within the group to which they belong, and may perform unicast, groupcast, or broadcast communication with at least one other UE belonging to a different group. Although two groups are illustrated in FIG. 7B, the disclosure is not limited thereto, and may be applied to a case in which more groups are formed.

Meanwhile, although not illustrated in FIG. 7A or FIG. 7B, the sidelink UEs may also perform broadcast communication. Broadcast communication refers to a scheme in which all sidelink UEs receive data and control information transmitted through the sidelink by the sidelink transmitting UE. For example, if the first UE 730 in FIG. 7B is a transmitting UE, the remaining UEs 735, 740, 745, 750, 755, and 760 may receive data and control information transmitted by the first UE 730.

The aforementioned sidelink unicast communication, groupcast communication, and broadcast communication may be supported in an in-coverage scenario, a partial-coverage scenario, or an out-of-coverage scenario.

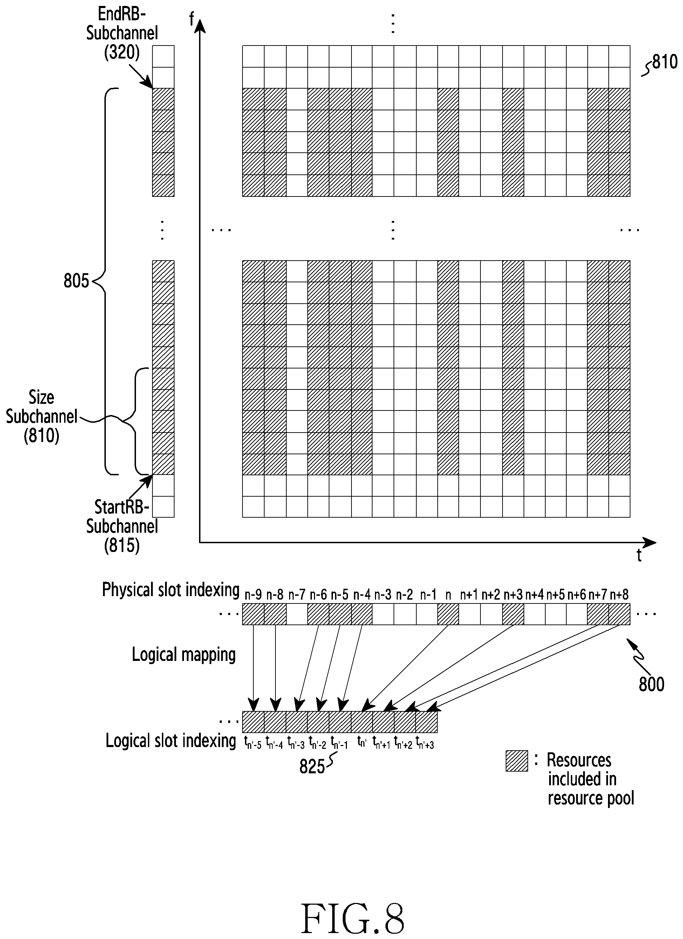

FIG. 8 illustrates an example of a sidelink resource pool in a wireless communication system according to an embodiment of the disclosure. The resource pool may be defined as a set of resources in the time and frequency domains used for sidelink transmission and reception.

The time-domain resource allocation unit (resource granularity) within a resource pool may be one or more than one orthogonal frequency division multiplexing (OFDM) symbols. In addition, the frequency-domain resource allocation unit may be one or more than one physical resource blocks (PRBs).

In case that a resource pool is allocated in the time and frequency domains, the area configured by resources indicated by diagonal lines denotes an area configured as a resource pool in the time and frequency domains. Although the disclosure is described based on a case in which a resource pool is assigned in a non-consecutive manner in the time domain, the disclosure is not limited thereto, and may also be applied to a case in which a resource pool is assigned in a consecutive manner in the time domain. In addition, although the disclosure is described based on a case in which a resource pool is allocated consecutively in the time domain, the disclosure is not limited thereto, and may also be applied to a case in which a resource pool is allocated in a non-consecutive manner in the time domain.

FIG. 8 illustrates a case in which resources are allocated in a non-consecutive manner in the time domain 800 of the configured resource pool. In the time domain 800 of the resource pool, the time-axis resource allocation unit (resource granularity) may be a slot. Specifically, one slot including 14 OFDM symbols may be a basic unit of time-axis resource allocation. Referring to the time domain 800 of the configured resource pool, the shaded slots represent slots allocated to the resource pool along the time axis, and the slots allocated to the resource pool along the time axis may be indicated by using system information. For example, slots allocated to the resource pool along the time axis may be indicated using time-domain resource pool configuration information inside an SIB. Specifically, at least one slot configured as a time-domain resource pool may be indicated through a bitmap. Referring to FIG. 8, physical slots 800 belonging to the non-consecutive resource pool along the time axis may be mapped to logical slots 825. In general, a set of slots belonging to a resource pool for a physical sidelink shared channel (PSSCH) may be expressed as (t0, t1, ..., ti, ..., tTmax).

FIG. 8 illustrates a case in which resources are allocated continuously in the frequency domain 805 of the configured resource pool. In the frequency domain 805 of the resource pool, the unit of resource allocation along the frequency axis may be a sub-channel 810. Specifically, a subchannel 810 configured by one or more resource blocks (RBs) may be defined as a basic unit of frequency-domain resource allocation. That is, a subchannel 810 may be defined as an integer multiple of an RB. Referring to FIG. 8, the subchannel size (sizeSubchannel) may be configured by five consecutive PRBs, but the disclosure is not limited thereto, and the size of the subchannel may be configured differently. In addition, although one subchannel is generally configured by consecutive PRBs, the subchannel is not necessarily configured by consecutive PRBs. The subchannel 810 may be a basic unit for resource allocation for the PSSCH. In addition, a subchannel regarding a physical sidelink feedback channel (PSFCH) may be defined independently of the PSSCH.

Referring to FIG. 8, the starting position of a subchannel in the frequency domain in a resource pool may be indicated by startRB-Subchannel 815. In case that the resource allocation unit along the frequency axis is a subchannel 810, frequency-domain resource pool configuration may be performed through the RB index (startRB-Subchannel 815) at which a subchannel starts, information (sizeSubchannel 810) indicating how many RBs constitute the subchannel, and configuration information regarding the total number (numSubchannel) of subchannels. In addition, the resource pool configuration in the frequency domain may also be performed through configuration information regarding the RB index (EndRB-Subchannel) 820 at which the subchannel ends. According to various embodiments, subchannels allocated to a resource pool in the frequency domain may be indicated by using system information. For example, at least one of startRB-Subchannel, sizeSubchannel, EndRB-Subchannel, and numSubchannel may be indicated as frequency resource pool configuration information in the SIB. In case that the subchannel regarding the PSFCH is defined independently of the PSSCH, the subchannel configuration information of the PSFCH and the PSSCH may be separately indicated to the UE.

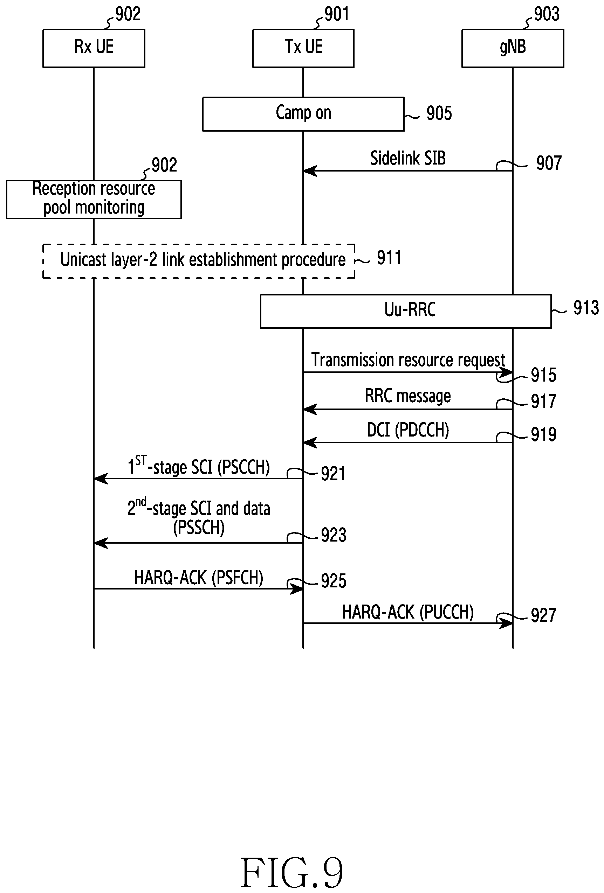

FIG. 9 illustrates an example of a signal flow for allocating sidelink transmission resources in a wireless communication system according to an embodiment of the disclosure. FIG. 9 illustrates signal exchange between a transmitting UE 901, a receiving UE 902, and a base station 903.

As described below, a scheme in which the base station allocates a transmission resource for sidelink communication may be referred to as mode 1. Mode 1 is a scheme based on scheduled resource allocation by the base station. More specifically, in mode 1 resource allocation, the base station may allocate resources used for sidelink transmission to RRC-connected UEs in accordance with a dedicated scheduling scheme. Since the base station may manage resources used for sidelink transmission, scheduled resource allocation may be advantageous for interference management and resource pool management (e.g., dynamic allocation and/or configured grant (CG)).

Referring to FIG. 9, in operation 907, the transmitting UE 901 that is camping on a cell (905) the cell may receive a sidelink SIB from the base station 903. In operation 909, the receiving UE 902 may monitor sidelink communication, based on a sidelink SIB or an RRC message received from the base station (e.g., 903) or a Rx resource pool included in a pre-configuration. The receiving UE 902, as used herein, refers to a UE that receives data transmitted by the transmitting UE 901. The sidelink SIB may be transmitted periodically or on demand. In addition, the sidelink SIB may include at least one of sidelink resource pool information for sidelink communication, parameter configuration information for a sensing operation, information for configuring sidelink synchronization, or carrier information for sidelink communication operating at different frequencies. Although operation 907 and operation 909 have been described as performed in sequence above, this is for the sake of description, and operation 907 and operation 909 may be performed in parallel.

In operation 913, if data traffic for sidelink communication is generated in the transmitting UE 901, the transmitting UE 901 may start an RRC connection procedure with the base station 903 to request (915) a transmission resource. The RRC connection between the transmitting UE 901 and the base station 903 may be referred to as Uu-RRC. The Uu-RRC connection may be performed before the UE 901 generates data traffic. In addition, in the case of mode 1, the transmitting UE 901 make perform transmission to the receiving UE 902 through the sidelink while the Uu-RRC connection is established between the base station 903 and the receiving UE 902. In addition, in the case of mode 1, the transmitting UE 901 make perform transmission to the receiving UE 902 through the sidelink even in a state in which no Uu-RRC connection is established between the base station 903 and the receiving UE 902.

In operation 915, the transmitting UE 901 may request the base station 903 to provide a transmission resource for transmitting sidelink data to the receiving UE 902. The transmitting UE 901 may send a request for a sidelink transmission resource to the base station 903 by using at least one of a physical uplink control channel (PUCCH), an RRC message, or a MAC CE. For example, in case that a MAC CE is used, the MAC CE may be a buffer state report (BSR)-related MAC CE having a new format including at least one of an indicator for indicating that the buffer status report for sidelink communication, and information regarding the size of data stored in a buffer for device-to-device (D2D) communication (or V2X communication). Such a MAC CE may be referred to as a sidelink BSR MAC CE. In addition, in case that a PUCCH is used, the transmitting UE 901 may request a sidelink resource through a bit of a scheduling request (SR) transmitted through the PUCCH. In addition, in case that RRC is used, the transmitting UE 901 may transfer, through the Uu-RRC, information of the receiving UE 902 and frequencies for transmission and reception of various types of sidelink communication including sidelink discovery, sidelink data communication, and sidelink relay communication to the base station, and at least one of the following pieces of information may be included through identical or different RRC messages.
* Frequency to be used for reception in sidelink communication
* Frequency to be used for transmission in sidelink communication
* The type of sidelink data transmitted in sidelink communication
* The periodicity and size of sidelink data transmitted in sidelink communication
* Information of the target UE receiving sidelink data transmitted in sidelink communication (the target UE's ID, UE capability, DRX information, etc.)
* QoS information of sidelink data transmitted in sidelink communication
* The cast type of sidelink data transmitted in sidelink communication
* The RLC mode of sidelink data transmitted in sidelink communication

In operation 915, the PUCCH, MAC CE, and RRC message may be used independently of each other or may be used in combination according to the purpose. In addition, operation 915 is described after operation 913, but this is for the sake of description, and may also be used to request the resource of sidelink data to be transmitted by the transmitting UE 901 in the unicast layer-2 link establishment procedure 911 for establishing a PC5 unicast link with the receiving UE 902, and may be performed in parallel or simultaneously with other operations.

In operation 917, the base station 903 may transmit an RRC message including information of a transmission resource to be used by the transmitting UE 901 to the transmitting UE 901.

In operation 919, the base station 903 may transmit downlink control information (DCI) to the transmitting UE 901 through a PDCCH.

Through operations 917 to 919, the base station 903 may indicate, to the transmitting UE 901, scheduling for sidelink communication with the receiving UE 902. More specifically, the base station 903 may allocate a sidelink transmission resource to the transmitting UE 901 according to at least one of a dynamic grant (DG) scheme or a configured grant (CG) scheme.

In the case of the dynamic grant (DG) scheme, the base station 903 may allocate a resource regarding transmission of at least one transport block (TB) by transmitting DCI 919 to the transmitting UE 901. The sidelink scheduling information included in the DCI may include resource pool information, parameters related to an initial transmission occasion and/or a transmission occasion of retransmission, and a parameter related to a frequency allocation location information field. The DCI regarding the dynamic grant scheme may be cyclically redundancy check (CRC)-scrambled based on a sidelink radio network temporary identifier (SL-RNTI) to indicate that the transmission resource allocation scheme is a dynamic grant scheme.

In the case of the configured grant (CG) scheme, the base station 903 may periodically allocate resources for transmitting at least one TB through an RRC message 917 or may configure the periodicity of the sidelink CG. Additionally, the base station 903 may transmit DCI to the transmitting UE 901 to activate and/or deactivate an existing CG or indicate retransmission. The sidelink scheduling information included in the DCI may include parameters related to an initial transmission occasion and/or a transmission occasion of retransmission, and a parameter related to a frequency allocation location information field. In the case of the configured grant scheme, the initial transmission occasion and/or the transmission occasion of retransmission and the frequency allocation location may be determined according to the transmitted DCI, and the resource may be repeated in the CG periodicity interval. DCI regarding the configured grant scheme may be CRC-scrambled based on a sidelink configured scheduling radio network temporary identifier (SL-CS-RNTI) to indicate that the transmission resource allocation scheme is a configured grant scheme. In addition, the configured grant scheme may be classified into type 1 CG and type 2 CG.

In case that broadcast transmission is performed between the transmitting/receiving UEs 901 and 902, the transmitting UE 901 may broadcast SCI and data to at least one receiving UE (e.g., 902) through a PSCCH and a PSSCH without a PC5 unicast link connection in operation 921 and operation 923.

In case that unicast or groupcast transmission is performed between the transmitting/receiving UEs 901 and 902, the transmitting UE 901 may perform a unicast layer-2 link establishment procedure 911 in operation 911 for direct communication with other UEs (e.g., the receiving UE 902). The upper layer (e.g., ProSe or V2X layer) of the transmitting/receiving UEs 901 and 902 may provide a PC5 link ID and/or a source Layer-2 ID and a destination Layer-2 ID such that the AS layer of the transmitting/receiving UEs 901 and 902 may identify the PC5 unicast link. The RRC connection between the UEs 901 and 902 may be used in unicast communication, and is a logical RRC connection corresponding to a pair of source Layer-2 ID and destination Layer-2 ID. Such an RRC connection between the UEs 901 and 902 may be referred to as PC5-RRC to distinguish it from Uu-RRC. In the case of a groupcast transmission scheme, a PC5-RRC connection may be individually configured between a transmitting UE and a receiving UE within a group. Referring to FIG. 9, the unicast layer-2 link establishment procedure 911 is illustrated as an operation after the sidelink SIB reception 907, but the unicast layer-2 link establishment procedure 911 may be performed before receiving the sidelink SIB, or may not be performed in the case of a broadcast or groupcast transmission that does not require PC5-RRC. If a PC5-RRC connection is required, a unicast layer-2 link establishment procedure 911 may be performed. In operation 921, the transmitting UE 901 may transmit 1-operation SCI to the receiving UE 902 through the PSCCH. In addition, in operation 921, the transmitting UE 901 may transmit 2-operation SCI and sidelink data to the receiving UE 902 through the PSSCH. In case of mode 1, the transmitting UE 901 may identify sidelink scheduling information included in DCI received from the base station 903, and may perform sidelink scheduling, based on the sidelink scheduling information. SCI may be divided into 1st-stage SCI transmitted through a PSCCH and 2nd-stage SCI transmitted through a PSSCH, and the 1st-stage SCI may include at least one of the following pieces of information.
* Priority
* Frequency resource assignment
* Time resource assignment
* Resource reservation period
* De-modulation reference signal (DMRS) pattern
* 2nd-stage SCI format
* Beta_offset indicator
* Number of DMRS ports
* Modulation and coding scheme
* Additional MCS table indicator
* PSFCH overhead indication
* Reserved
* Conflict information receiver flag

The priority may be transmitted or configured from the upper layer, and may designate a maximum value of 8 by using 3 bits such that, for example, priority value 1 corresponds to 000, and 2 corresponds to 001. This value may have the highest value among the priorities of all the logical channels or MAC CEs included in the TB scheduled by the SCI, in the case of sidelink data. In the case of transmission of a MAC CE or SCI for inter-UE coordination, this value may be configured by an RRC parameter, different from the priority of the corresponding MAC CE. In case that there is no configuration of RRC parameters, the inter-UE coordination request MAC CE may have the highest value among the priorities of all the logical channels or MAC CEs included in the TB to be transmitted to the UE that receives the corresponding MAC CE, and an inter-UE coordination information MAC CE transmitted by the UE to respond to the request, after receiving the same, may have the same value as the value corresponding to the priority field in the inter-UE coordination request MAC CE. In addition, in case that the inter-UE coordination information MAC CE is transmitted not by a request of another UE but by a specific condition (e.g., in case that the RSRP of a resource reserved by a third UE is higher than a specific value), the priority may be arbitrarily selected by the UE from among values between 1 and 8.

In case that resources regarding multiple TBs (i.e., multiple MAC protocol data units (PDUs)) are selected, the reservation interval may indicate a fixed value of the interval between the TBs. In case that a resource is selected for one TB, "0" may be indicated as the value of interval between TBs.

The 2nd-stage SCI may be included in the PSSCH resource indicated by the 1st-stage SCI transmitted in operation 921, and may be transmitted together with data in operation 923. The 2nd-stage SCI may include at least one of the following pieces of information.
* HARQ process number
* New data indicator
* Redundancy version
* Source ID
* Destination ID
   * HARQ feedback enabled/disabled indicator
* Cast type indicator
* CSI request
* Zone ID
* Communication range requirement
* Providing/requesting indicator
* Resource combinations
* First resource location
* Reference slot location
* Resource set type
* Lowest subChannel indices
* Priority
* Number of subchannels
* Resource reservation period
Resource selection window location
* Resource set type
* Padding bits

In addition, in operation 925, the receiving UE 902 may transmit, to the transmitting UE 901, first HARQ feedback information indicating whether demodulation/decoding of received data through operation 921 and 923 is successful or not. The first HARQ feedback information includes information such as ACK (success) or NACK (failure), and the receiving UE 902 transmits the first HARQ feedback information to the transmitting UE 901 through the PSFCH channel. In operation 927, the transmitting UE 901 transmits the transmission result as second HARQ feedback information to the base station 903, based on the first HARQ feedback information received from the receiving UE 902. The second HARQ feedback is transmitted to the base station through the PUCCH. The second HARQ feedback information may be identical to or different from the first HARQ feedback information. In addition, the second HARQ feedback information may include multiple pieces of first HARQ feedback information. The multiple pieces of first HARQ feedback information may include multiple pieces of HARQ feedback information received from one receiving UE or include one or multiple pieces of HARQ feedback information received from multiple UEs. Through the second HARQ feedback information, the base station may allocate resources for retransmission to the transmitting UE 901, or may allocate resources for a new transmission to the transmitting UE 901, or may stop resource allocation to the transmitting UE 901 if there is no more resource to be allocated. PUCCH transmission resources may be determined by DCI information transmitted by the base station to the transmitting UE through the PDCCH. PSFCH (925) transmission resources may be determined by the SCI of the PSCCH or by the transmission resource area in which the PSSCH has been transmitted/received.

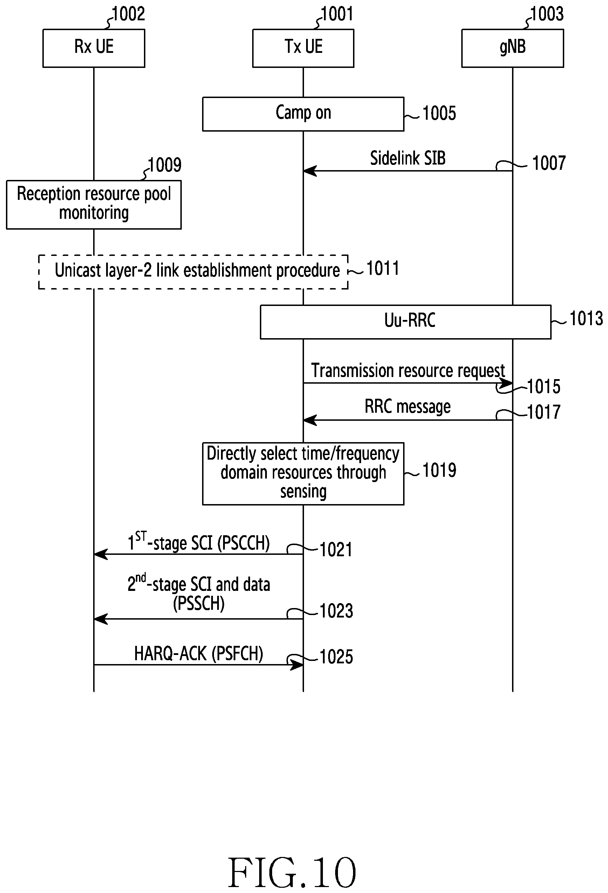

FIG. 10 illustrates another example of a signal flow for allocating a sidelink transmission resource in a wireless communication system according to an embodiment of the disclosure. FIG. 10 illustrates signal exchange between a transmitting UE 1001, a receiving UE 1002, and a base station 1003.

As described below, a scheme in which a UE directly allocates transmission resources for sidelinks through sensing in the sidelink may be referred to as mode 2. Mode 2 may also be referred to as UE autonomous resource selection. Specifically, according to mode 2, the base station 1003 may provide a sidelink transmission/reception resource pool for the sidelink to the UE through a sidelink SIB or an RRC message (e.g., RRCReconfiguration message or PC5 RRC message), and the transmitting UE 1001 may select a resource pool and a resource according to a predetermined rule. Unlike mode 1, in which the base station directly participates in resource allocation as described in FIG. 9, in mode 2 described in FIG. 10, the transmitting UE 1001 may autonomously select a resource and transmit data, based on a resource pool previously received through a sidelink SIB, an RRC message, or a pre-configuration.

Referring to FIG. 10, in operation 1007, the transmitting UE 1001 that is currently camping on (1005) may receive a sidelink SIB from the base station 1003. In operation 1009, the receiving UE 1002 may monitor sidelink communication, based on a sidelink SIB or an RRC message received from the base station (e.g., 1003), or a Rx resource pool included in a pre-configuration. As used herein, the receiving UE 1002 refers to a UE that receives data transmitted by the transmitting UE 1001. The sidelink SIB may be transmitted periodically or on demand. In addition, the sidelink SIB may include at least one of sidelink resource pool information for sidelink communication, parameter configuration information for a sensing operation, information for configuring sidelink synchronization, or carrier information for sidelink communication operating at different frequencies. Although operations 1007 and 1009 are described above in sequence, this is for the sake of convenience in description, and operations 1007 and 1009 may be performed in parallel. In the case of FIG. 9 described above, the base station 1003 and the transmitting UE 1001 operate in an RRC-connected state, whereas in FIG. 10, the base station 1003 and the transmitting UE 1001 may operate regardless of whether there is an RRC connection between the base station 1003 and the transmitting UE 1001 in operation 1013. That is, in case that the transmitting UE 1001 is IC, sidelink communication based on mode 2 may be performed in an RRC-connected state, in an idle or inactive state having no RRC connection, or even in an OOC state. In addition, even in the RRC-connected state, the base station 1003 may not directly participate in resource allocation and may configure the transmitting UE 1001 to autonomously select a transmission resource.

In operation 1013, if data traffic for sidelink communication is generated in the transmitting UE 1001, the transmitting UE 1001 may initiate an RRC connection procedure with the base station 1003 in order to request (1015) a transmission resource. The RRC connection between the transmitting UE 1001 and the base station 1003 may be referred to as Uu-RRC. The Uu-RRC connection may be performed prior to data traffic generation by the transmitting UE 1001.

In operation 1015, the transmitting UE 1001 may request, from the base station 1003, a transmission resource for transmitting sidelink data to the receiving UE 1002 by using an RRC message. The transmitting UE 1001 may transfer information of the receiving UE 1002 and frequencies for various types of sidelink communication transmission and reception, including sidelink discovery, sidelink data communication, and sidelink relay communication, to the base station through the Uu-RRC, and the same may include at least one of the above-described examples of information in FIG. 9 through identical or different RRC messages.

In operation 1017, the base station 1003 may configure a resource pool for the transmitting UE 1001, based on a transmission resource requested by the transmitting UE 1001.

In operation 1019, the transmitting UE 1001 may directly select time and frequency domain resources through the side link SIB 1007 or RRC message 1017 from the base station 1003, or sensing in the transmission resource pool configured by the pre-configuration.

In case that broadcast transmission is performed between the transmitting/receiving UEs 1001 and 1002, the transmitting UE 1001 may broadcast SCI and data to at least one receiving UE (e.g., 1002) through a PSCCH and a PSSCH without a PC5 unicast link connection in operation 1021 and operation 1023.

In case that unicast or groupcast transmission is performed between the transmitting/receiving UEs 1001 and 1002, the transmitting UE 1001 may perform a unicast layer-2 link establishment procedure 1011 in operation 1011 for direct communication with other UEs (e.g., the receiving UE 1002). The upper layer (e.g., ProSe or V2X layer) of the transmitting/receiving UEs 1001 and 1002 may provide a PC5 link ID and/or a source Layer-2 ID and a destination Layer-2 ID such that the AS layer of the transmitting/receiving UEs 1001 and 1002 may identify the PC5 unicast link. The RRC connection between the UEs 1001 and 1002 may be used in unicast communication, and is a logical RRC connection corresponding to a pair of source Layer-2 ID and destination Layer-2 ID. Such an RRC connection between the UEs 1001 and 1002 may be referred to as PC5-RRC to distinguish it from Uu-RRC. In the case of a groupcast transmission scheme, a PC5-RRC connection may be individually configured between a transmitting UE and a receiving UE within a group. Referring to FIG. 10, the unicast layer-2 link establishment procedure 1011 is illustrated as an operation after the sidelink SIB reception 1007, but the unicast layer-2 link establishment procedure 1011 may be performed before receiving the sidelink SIB, or may not be performed in the case of a broadcast or groupcast transmission that does not require PC5-RRC. If a PC5-RRC connection is required, a unicast layer-2 link establishment procedure 1011 may be performed. In operation 921, the transmitting UE 1001 may transmit 1-operation SCI to the receiving UE 1002 through the PSCCH. In addition, in operation 1021, the transmitting UE 1001 may transmit 2-operation SCI and sidelink data to the receiving UE 1002 through the PSSCH. In case of mode 1, the transmitting UE 901 may identify sidelink scheduling information included in DCI received from the base station 903, and may perform sidelink scheduling, based on the sidelink scheduling information. In the case of mode 2, the transmitting UE 1001 may directly perform scheduling regarding the sidelink by performing sensing and transmission resource selection operations. The 1st-stage SCI and the 2nd-stage SCI used in operations 1021 and 1023 may be the same as in the example of FIG. 9.

In addition, in operation 1025, the receiving UE 1002 may transmit, to the transmitting UE 1001, HARQ feedback information indicating whether modulation/decoding of the data received in operations 1021 and 1023 is successful. The HARQ feedback information includes ACK (success) or NACK (failure) information, and the receiving UE 1002 transfers the HARQ feedback information to the transmitting UE 1001 through the PSFCH channel.

In addition, although not illustrated in FIG. 9 or FIG. 10, if any transmitting UE (e.g., 1001) performs sidelink communication in OOC, mode 2 resource allocation may be used and, as available information for sidelink communication, information stored in the UE through the pre-configuration may be used, or configuration information may be received from the base station through a sidelink relay.

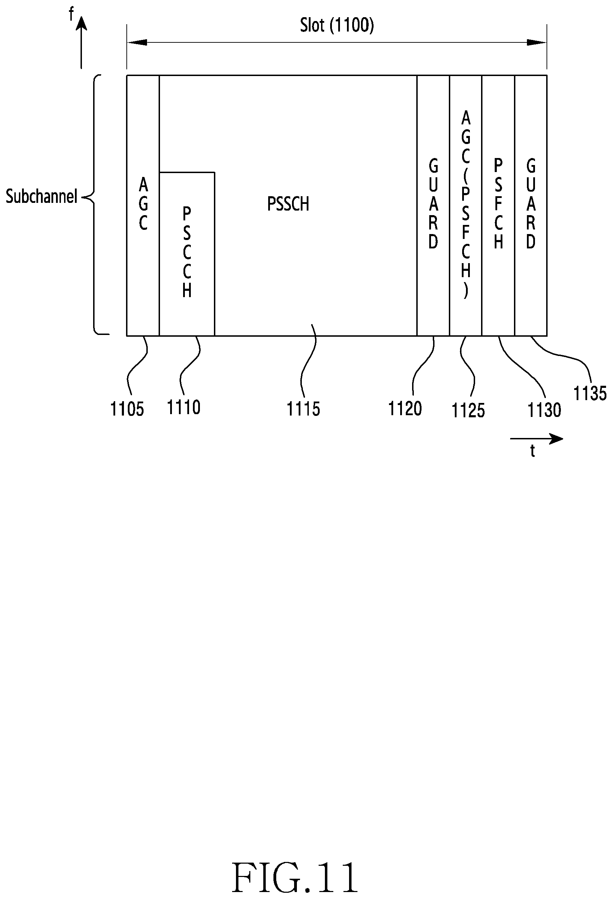

FIG. 11 illustrates an example of a channel structure of a slot used for sidelink communication in a wireless communication system according to an embodiment of the disclosure. FIG. 11 illustrates physical channels mapped to a slot for sidelink communication.

Referring to FIG. 11, an automatic gain control (AGC) symbol 1105 available to the receiving UE is mapped to the first symbol of the slot 1100. Thereafter, a PSCCH 1110, a PSSCH 1115, a GUARD 1120, an AGC 1125 for a PSFCH, a PSFCH 1130, and a GUARD 1135 may be mapped in sequence.

Before transmitting the PSCCH in the corresponding slot 1100, the transmitting UE may transmit a signal for AGC purposes having the same information as the symbol in which the PSCCH 1110 is transmitted in one or more symbols. The AGC symbol 1105 may be used to allow the receiving UE to properly perform automatic gain control (AGC) for adjusting the strength of amplification when amplifying the power of a received signal. The signal for AGC may be referred to as a "synchronization signal", "sidelink synchronization signal", "sidelink reference signal", "midamble", "initial signal", "wake-up signal", or another term having an equivalent technical meaning.

A PSCCH 1110 including control information may be transmitted by using symbols transmitted at the beginning of a slot, and a PSSCH 1115 scheduled by the control information of the PSCCH 1110 may then be transmitted. The PSSCH 1115 may have at least a part of SCI (control information) mapped thereto. Thereafter, a GUARD 1120 and an AGC 1125 for a PSFCH may exist, and a physical channel for transmitting feedback information (i.e., a PSFCH 1130) may be mapped.

In the example illustrated in FIG. 11, the PSFCH 1130 is located in the penultimate symbol of the slot. By securing a GUARD 1120 (a predetermined period of empty time) between the PSSCH 1115 and the PSFCH 1130, a UE that has transmitted or received the PSSCH 1115 may prepare for transmitting or receiving the PSFCH 1130 (for example, transmission/reception switching). In addition, there may be an AGC 1125 for the PSFCH 1130. After the PSFCH 1130, a GUARD 1135 (a predetermined period of empty time) exists.

The UE may have the location of a PSFCH transmission slot preconfigured therefor. As used herein, the pre-configuration may refer to a procedure in which the same is predetermined during the UE manufacturing process, the same is transferred when accessing a sidelink-related system, the same is transferred from the base station when accessing the base station, or the same is transferred from another UE.

In the embodiment of FIG. 11, a preamble signal for performing AGC has been described as being separately transmitted in the physical channel structure inside a sidelink slot. However, according to another embodiment, a separate preamble signal may not be transmitted, and the receiver of the receiving UE may perform an AGC operation by using a physical channel for control information or data transmission while receiving a physical channel for control information or data transmission.

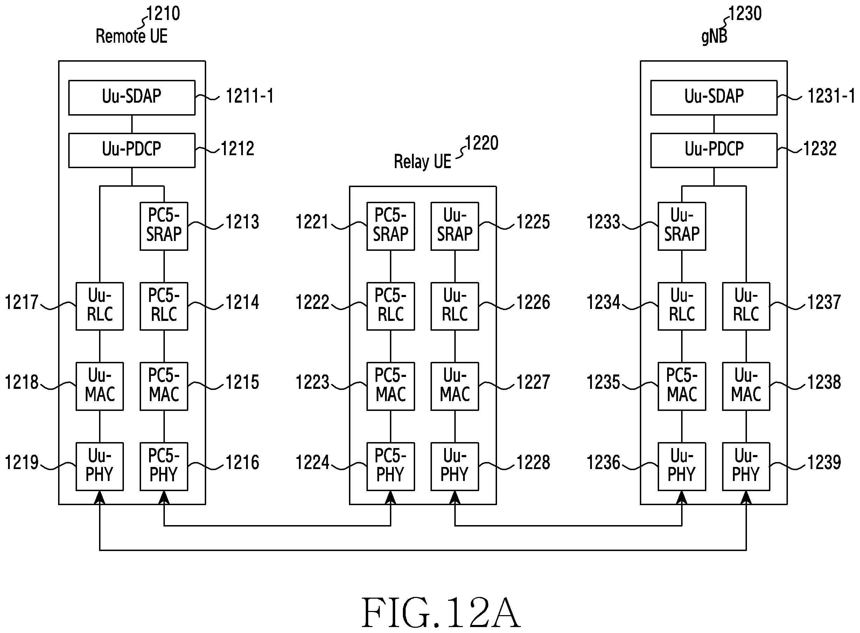

FIG. 12A is a diagram illustrating a user plane radio protocol structure of a multi-path UE-network relay according to an embodiment of the disclosure.

Referring to FIG. 12A, the first UE 1210 has a PC5 unicast link established/formed to transmit/receive data to/from the second UE 1220, and the second UE 1220 has a Uu link established/formed to transmit/receive data to/from the base station 1230. The second UE 1220 may relay data transmitted by the first UE 1210 to the base station 1230, and the second UE 1220 may relay data transmitted by the base station 1230 to the first UE 1210. Data transmission/reception between the first UE 1210 and the base station 1230 through the second UE 1220 may be referred to as U2N relay, and may be referred to as an indirect path in the disclosure, in order to clearly indicate that it is not a direct communication link with the base station 1230. In addition, the first UE 1210 has a Uu link established for transmitting/receiving data to/from the base station 1230, and the first UE 1210 may transmit/receive DL or UL data to/from the base station 1230. The data transmission/reception between the first UE 1210 and the base station 1230 may be referred to as a direct path in the disclosure, in order to clearly indicate that the same is not data transmission/reception through an indirect path or relay. The second UE 1220 that configures an indirect path from the first UE 1210 to the base station 1230 through the second UE 1220 may be referred to as a serving relay, and the base station 1230 that configures a direct path from the first UE 1210 to the base station 1230 may be referred to as a serving gNB, or the cell of the base station may be referred to as a serving cell.

The first UE 1210 may transmit/receive data to/from the base station 1230 through the U2N relay and may be referred to as a U2N remote UE. The second UE 1220 may perform data transmission/reception through the U2N relay between the first UE 1210 and the base station 1230, and may be referred to as a U2N relay UE.

For transmission/reception of user data through a direct path and an indirect path, the user plane radio protocol of the first UE 1210, the second UE 1220, and the base station 1230 may include Uu-SDAPs 1211-1 and 1231-1, Uu-PDCPs 1212 and 1232, PC5-SRAPs 1213 and 1221, Uu-SRAPs 1225 and 1233, PC5-RLCs 1214 and 1222, and Uu-RLCs 1217, 1226, 1234, and 1237, PC5-MACs 1215 and 1223, Uu-MACs 1218, 1227, 1235, and 1238, PC5-PHYs 1216 and 1224, and Uu-PHYs 1219, 1228, 1236, and 1239.

The main functions of the Uu-SDAP 1211-1 or 1231-1 may include some of functions below. However, the functions described below are not limiting.
- Mapping between a PC5 QoS flow and a SL-DRB for NR sidelink communication
- Marking PC5 QoS flow ID in unicast of NR sidelink communication packets

The main functions of the Uu-PDCP 1212 or 1232 may include some of functions below. However, the functions described below are not limiting.
- Transfer of data (user plane or control plane)
- Maintenance of PDCP SNs
- Header compression and decompression using ROHC protocol
- Header compression and decompression using EHC protocol
- Compression and decompression of uplink PDCP SDUs: DEFLATE based UDC only
- Ciphering and deciphering
- Integrity protection and integrity verification
- Timer based SDU discard
- For split bearers, routing
- Duplication
- Reordering and in-order delivery
- Out-of-order delivery
- Duplicate discarding

The main functions of the PC5-SRAP 1213 or 1221 may include some of functions below. However, the functions described below are not limiting.
- Data transfer
- Determination of UE ID field and BEARER ID field for data packets
- Determination of egress link
- Determination of egress RLC channel

The main functions of the PC5-RLC 1214 or 1222 and the Uu-RLC 1217, 1226, 1234, or 1237 may include some of functions below. However, the functions described below are not limiting.
- Transfer of upper layer PDUs
- Sequence numbering independent of the one in PDCP (UM and AM)
- Error correction through ARQ (AM only)
- Segmentation (AM and UM) and re-segmentation (AM only) of RLC SDUs
- Reassembly of SDU (AM and UM)
- Duplicate detection (AM only)
- RLC SDU discard (AM and UM)
- RLC re-establishment
- Protocol error detection (AM only)

The main functions of the PC5-MAC 1215 or 1223 and the Uu-MAC 1218,, 1227, 1235, or 1238 may include some of functions below. However, the functions described below are not limiting.
- Mapping between logical channels and transport channels
- Multiplexing of MAC SDUs from one or different logical channels onto transport blocks (TBs) to be delivered to physical layer on transport channels
- Demultiplexing of MAC SDUs to one or different logical channels from transport blocks (TBs) delivered from physical layer on transport channels
- Scheduling information reporting
- Error correction through HARQ
- Logical channel prioritization
- Priority handling between overlapping resources of one UE
- Radio resource selection

The PC5-PHY layer 1216 or 1224 and the Uu-PHY 1219, 1228, 1236, or 1239 may perform channel coding and modulation of upper layer data to generate OFDM symbols and may convert the OFDM symbols into an RF signal and then transmit the same through an antenna, In addition, the PHY layer may perform demodulation and channel decoding of the received OFDM symbols and then transfer the OFDM symbols to an upper layer.

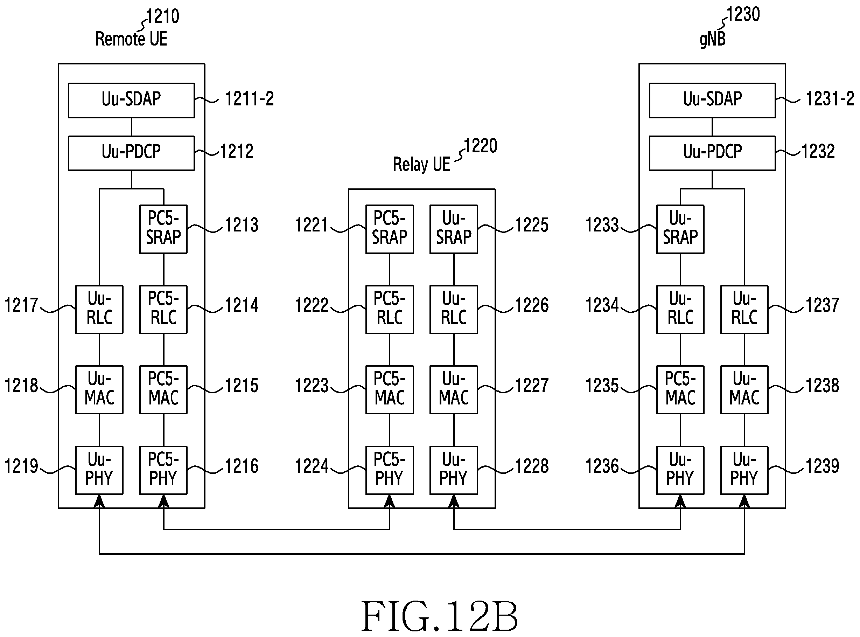

FIG. 12B is a diagram illustrating a control plane radio protocol structure of a multi-hop UE-network relay according to an embodiment of the disclosure.

Referring to FIG. 12B, the first UE 1210 has a PC5 unicast link established/formed to transmit/receive data to/from the second UE 1220, and the second UE 1220 has a Uu link established/formed to transmit/receive data to/from the base station 1230. The second UE 1220 may relay data transmitted by the first UE 1210 to the base station 1230, and the second UE 1220 may relay data transmitted by the base station 1230 to the first UE 1210. Data transmission/reception between the first UE 1210 and the base station 1230 through the second UE 1220 may be referred to as U2N relay, and may be referred to as an indirect path in the disclosure, in order to clearly indicate that it is not a direct communication link with the base station 1230. In addition, the first UE 1210 has a Uu link established/formed to transmit/receive data to/from the base station 1230, and the first UE 1210 may transmit/receive DL or UL data to/from the base station 1230. The data transmission/reception between the first UE 1210 and the base station 1230 may be referred to as a direct path in the disclosure, in order to clearly indicate that the same is not data transmission/reception through an indirect path or relay. The second UE 1220 that configures an indirect path from the first UE 1210 to the base station 1230 through the second UE 1220 may be referred to as a serving relay, and the base station 1230 that configures a direct path from the first UE 1210 to the base station 1230 may be referred to as a serving gNB, or the cell of the base station may be referred to as a serving cell.

For the transmission/reception of control data through the direct path and the indirect path, the control plane radio protocol of the first UE 1210, the second UE 1220, and the base station 1230 may include Uu-RRCs 1211-2 and 1231-2, Uu-PDCPs 1212 and 1232, PC5-SRAPs 1213 and 1221, Uu-SRAPs 1225 and 1233, PC5-RLCs 1214 and 1222, and Uu-RLCs 1217, 1226, 1234, and 1237, PC5-MACs 1215 and 1223, Uu-MACs 1218, 1227, 1235, and 1238, PC5-PHYs 1216 and 1224, and Uu-PHYs 1219, 1228, 1236, and 1239.

The main functions of the Uu-RRC 1311-2 or 1331-2 may include some of functions below. However, the functions described below are not limiting.
- Broadcast of system information related to AS and NAS
- Paging initiated by 5GC or NG-RAN
- Establishment, maintenance and release of an RRC connection between the UE and NG-RAN including: Addition, modification and release of carrier aggregation; addition, modification and release of dual connectivity in NR or between E-UTRA and NR.
- Security functions including key management
- Establishment, configuration, maintenance, and release of signaling radio bearers (SRBs) and data radio bearers (DRBs)
- Mobility functions including: handover and context transfer; UE cell selection and reselection and control of cell selection and reselection; inter-RAT mobility.
- QoS management functions
- UE measurement reporting and control of the reporting
- Detection of and recovery from radio link failure
- NAS message transfer to/from NAS from/to UE

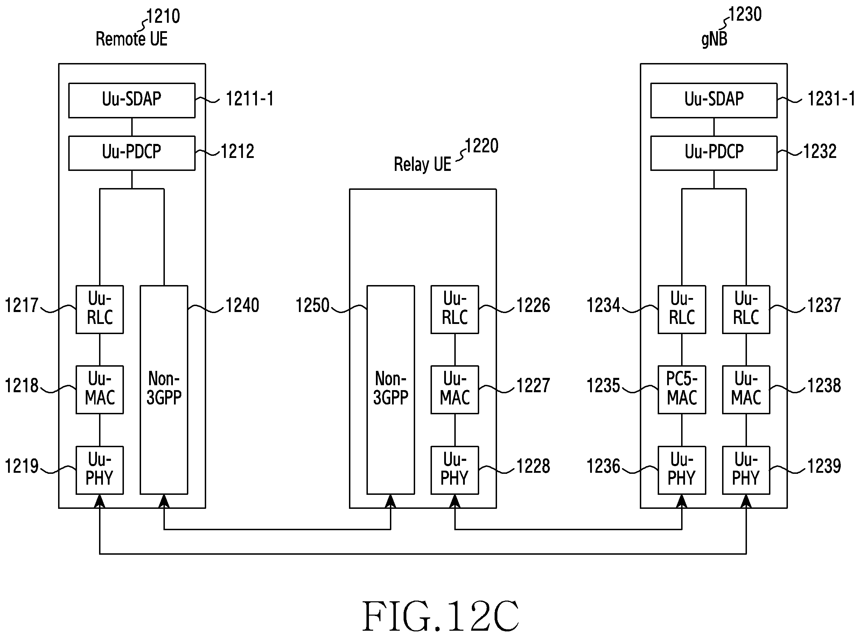

FIG. 12C is a diagram illustrating a user plane radio protocol structure of a multi-path UE-network relay that does not use 3GPP access in UE-to-UE communication according to an embodiment of the disclosure.

Referring to FIG. 12C, the first UE 1210 has non-3GPP links 1240 and 1250 established/formed to transmit/receive data to/from the second UE 1220, and the second UE 1220 has a Uu link established/formed to transmit/receive data to/from the base station 1230. The second UE 1220 may relay data transmitted by the first UE 1210 to the base station 1230, and the second UE 1220 may relay data transmitted by the base station 1230 to the first UE 1210. Data transmission/reception between the first UE 1210 and the base station 1230 through the second UE 1220 may be referred to as U2N relay, and may be referred to as an indirect path in the disclosure, in order to clearly indicate that it is not a direct communication link with the base station 1230. In addition, the first UE 1210 has a Uu link established/formed to transmit/receive data to/from the base station 1230, and the first UE 1210 may transmit/receive DL or UL data to/from the base station 1230. The data transmission/reception between the first UE 1210 and the base station 1230 may be referred to as a direct path in the disclosure, in order to clearly indicate that the same is not data transmission/reception through an indirect path or relay. The second UE 1220 that configures an indirect path from the first UE 1210 to the base station 1230 through the second UE 1220 may be referred to as a serving relay, and the base station 1230 that configures a direct path from the first UE 1210 to the base station 1230 may be referred to as a serving gNB, or the cell of the base station may be referred to as a serving cell. The non-3GPP links 1240 and 1250 may be a method of communication between UEs, which may include Wi-Fi or Bluetooth, which do not use V2X, ProSe, or Sidelink that uses a RAT of a technology (e.g., LTE/NR) defined in 3GPP.

For the transmission/reception of control data through the direct path and the indirect path, the user plane radio protocol of the first UE 1210 and the second UE 1220, and the base station 1230 may include Uu-SDAPs 1211-1 and 1231-1, Uu-PDCPs 1212 and 1232, Uu-RLCs 1217, 1226, 1234, and 1237, Uu-MACs 1218, 1227, 1235, and 1238, and Uu-PHsY 1219, 1228, 1236, and 1239. The connection of the non-3GPP links 1240 and 1250 between the first UE 1210 and the second UE 1220 may be configured by a method not defined by 3GPP, for example, a method for always connecting the first UE 1210 and the second UE 1220, or may be connected by a method not defined by 3GPP.

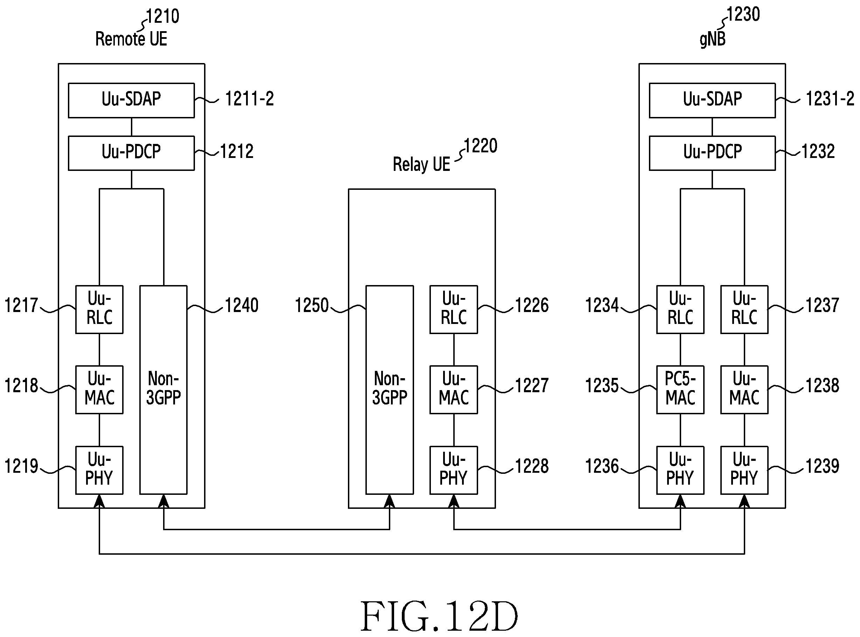

FIG. 12D is a diagram illustrating a user plane radio protocol structure of a multi-path UE-network relay that does not use 3GPP access in UE-to-UE communication according to an embodiment of the disclosure.

Referring to FIG. 12D, the first UE 1210 has non-3GPP links 1240 and 1250 established/formed to transmit/receive data to/from the second UE 1220, and the second UE 1220 has a Uu link established/formed to transmit/receive data to/from the base station 1230. The second UE 1220 may relay data transmitted by the first UE 1210 to the base station 1230, and the second UE 1220 may relay data transmitted by the base station 1230 to the first UE 1210. Data transmission/reception between the first UE 1210 and the base station 1230 through the second UE 1220 may be referred to as U2N relay, and may be referred to as an indirect path in the disclosure, in order to clearly indicate that it is not a direct communication link with the base station 1230. In addition, the first UE 1210 has a Uu link established/formed to transmit/receive data to/from the base station 1230, and the first UE 1210 may transmit/receive DL or UL data to/from the base station 1230. The data transmission/reception between the first UE 1210 and the base station 1230 may be referred to as a direct path in the disclosure, in order to clearly indicate that the same is not data transmission/reception through an indirect path or relay. The second UE 1220 that configures an indirect path from the first UE 1210 may be referred to as a serving relay, and the base station 1230 that configures a direct path from the first UE 1210 may be referred to as a serving gNB, or the cell of the base station may be referred to as a serving cell. The non-3GPP links 1240 and 1250 may be a method of communication between UEs, which may include Wi-Fi or Bluetooth, which do not use V2X, ProSe, or Sidelink that uses a RAT of a technology (e.g., LTE/NR) defined in 3GPP.

For the transmission/reception of control data through the direct path and the indirect path, the user plane radio protocol of the first UE 1210 and the second UE 1220, and the base station 1230 may include Uu-RRCs 1211-2 and 1231-2, Uu-PDCPs 1212 and 1232, Uu-RLCs 1217, 1226, 1234, and 1237, Uu-MACs 1218, 1227, 1235, and 1238, and Uu-PHYs 1219, 1228, 1236, and 1239. The connection of the non-3GPP links 1240 and 1250 between the first UE 1210 and the second UE 1220 may be configured by a method not defined by 3GPP, for example, a method for always connecting the first UE 1210 and the second UE 1220, or may be connected by a method not defined by 3GPP.

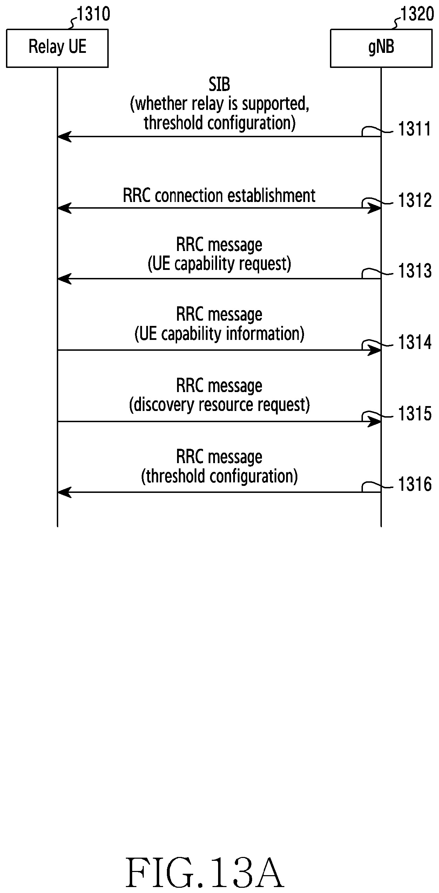

FIG. 13A is a diagram of a signal flow for transmitting a threshold condition of a multi-path UE network relay to a relay UE according to an embodiment of the disclosure.

Referring to FIG. 13A, the first UE 1310 may be located within the coverage of the base station 1320 (in-coverage (IC)) and may support a multi-path relay.

The base station 1320 may indicate whether a relay is supported in an SIB message (for example, SIB12), and in case that an indicator indicating relay support is included in the SIB message, the first UE 1310 may identify information indicating that the base station 1320 supports the relay. Information regarding whether the base station 1320 supports the relay may include L2 U2N relay, non-relay discovery, and L3 U2N relay discovery, and information regarding whether multi-path (MP) relay is supported may be transmitted in the form of true/false. In case that MP relay discovery message transmission is necessary, the first UE 1310 in the RRC_IDLE or RRC_INACTIVE state may perform a procedure 1312 for establishing an RRC connection to the base station 1320 supporting an L2 U2N relay and/or an MP relay.

The base station 1320 may request the first UE 1310 to provide capability information of the first UE 1310 through an RRC message 1313 (for example, UECapabilityEnquiry) in order to acquire capability information of the first UE 1310 in the RRC_CONNECTED state. The first UE 1310 may transmit an indicator including information indicating support for a sidelink relay of 3GPP Release 18 or an indicator including information indicating support for a multi-path relay to the base station 1320 through an RRC message 1314 (for example, UECapabilityInformation). Whether a multi-path relay is supported or a sidelink relay of Release 18 is supported may be differently indicate whether a relay or a remote UE's operation is supported. For example, the RRC message 1314 may be capability information indicating that the first UE 1310 supports a multi-path relay and is capable of operating as a relay UE of a multi-path relay. Through this message (RRC message 1314), the base station 1320 may know that the first UE 1310 supports multi-path relay. In addition, although not illustrated in the drawings, the access and mobility management function (AMF) may receive information regarding whether the L2 and/or L3 UE-network relay operations of the first UE 1310 are allowed, and whether the corresponding operation-specific relay and/or remote UE operation are allowed, from a unified data management (UDM) or a unified data repository (UDR), and may transmit the same to the base station 1320 via NGAP or the like.

In case that the first UE 1310 supports the MP relay UE operation and is in an RRC_CONNECTED state in which an RRC connection with the base station 1320 has been configured, the first UE 1310 may transmit an RRC message 1315 (e.g., SidelinkUEInformationNR) for requesting the base station 1320 to provide resources for transmitting/receiving a discovery message and sharing information related to discovery used in a multi-path relay, to the base station 1320. This information may be transmitted as in Table 1 below.

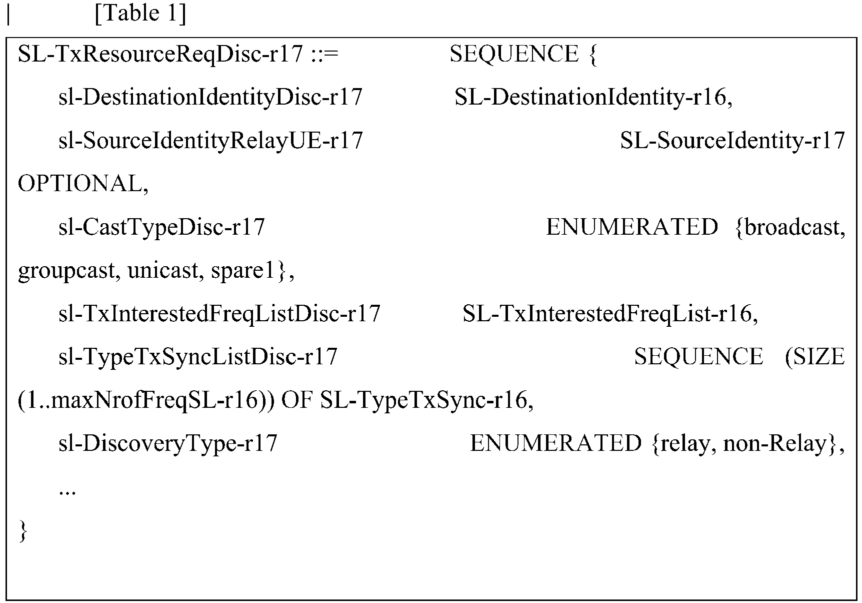

The source layer-2 ID used by the first UE 1310 when transmitting a discovery for MP relay may be identical to or different from the source layer-2 ID used by the first UE 1310 when transmitting a discovery for U2N relay. In case that source layer-2 ID used by the first UE 1310 when transmitting a discovery for MP relay is different from the source layer-2 ID used by the first UE 1310 when transmitting a discovery for U2N relay, the two IDs may be distinguished by sl-DiscoveryType or a similar IE, or may be distinguished in the form of a new IE (for example, sl-SourceIdentityMPRelayUE). In addition, in order to distinguish the purpose of the discovery transmission from that of the U2N relay, information (for example, mp-Relay) indicating that a multi-path relay discovery is transmitted may be included in sl-Discovery Type or a similar IE.

Upon receiving the RRC message transmitted by the first UE 1310, the base station 1320 may configure a resource and a threshold for transmitting/receiving a discovery message for a U2N relay and/or an MP relay for the first UE 1310 through an RRC message 1316 (e.g., RRCReconfiguration).

According to an embodiment of the disclosure, in case that the first UE 1310 supports a U2N relay UE operation and is in an RRC_CONNECTED state in which an RRC connection with the base station 1320 is configured, the base station 1320 may configure the range of a threshold for discovery message transmission and/or reception operations of the first UE 1310 through an RRC message 1316 (for example, RRCReconfiguration). The threshold may be configured by at least one of threshHighRelay, threshLowRelay, hystMaxRelay, and hystMinRelay (or may include at least one thereof).

According to an embodiment of the disclosure, in case that the first UE 1310 supports a U2N relay UE operation and is in an RRC_IDLE or RRC_INACTIVE state in which no RRC connection with the base station 1320 is configured, the base station 1320 may configure the range of a threshold for discovery message transmission and/or reception operations of the first UE 1310 through an SIB message 1311 (e.g., SIB12). The threshold may be configured by at least one of threshHighRelay, threshLowRelay, hystMaxRelay, and hystMinRelay (or may include at least one thereof). The first UE 1310 may determine that the first UE 1310 satisfies a threshold condition for determining whether to operate as a U2N relay UE, if a value obtained by measuring the RSRP of a serving cell, a primary cell, or a camping cell is lower (or smaller) than a value obtained by subtracting hystMaxRelay from threshHighRelay, or if a value obtained by measuring the RSRP of a serving cell, a primary cell, or a camping cell is higher (or larger) than a value obtained by adding hystMinRelay to threshLowRelay. Upon determining that the first UE 1310 satisfies the threshold condition, the first UE 1310 may operate as a U2N relay UE.

In addition, if the value obtained by measuring the RSRP of a serving cell, a primary cell, or a camping cell is higher (larger) than threshHighRelay, or if the value measured as the RSRP of the serving cell, primary cell, or camping cell is lower (smaller) than threshLowRelay, the first UE 1310 may determine that the first UE 1310 does not satisfy the threshold condition for determining whether the first UE 1310 is to operate as a U2N relay UE. Upon determining that the first UE 1310 does not satisfy the threshold condition, the first UE 1310 may not operate as a U2N relay UE. Such an operation may be illustrated as in Table 2 below.

**[Table 2]**

| | | | |
|---|---|---|---|
| A UE capable of NR sidelink U2N Relay UE operation shall: | | | |
| | 1>if the threshold conditions specified in this clause were previously not met: | | |
| | | 2> if *threshHighRelay* is not configured; or the RSRP measurement of the Pcell, or the cell on which the UE camps, is below *threshHighRelay* by *hystMaxRelay* if configured; and | |
| | | 2> if *threshLowRelay* is not configured; or the RSRP measurement of the Pcell, or the cell on which the UE camps, is above *threshLowRelay* by *hystMinRelay* if configured: | |
| | | | 3> consider the threshold conditions to be met (entry); |
| | 1> else: | | |
| | | 2> if the RSRP measurement of the Pcell, or the cell on which the UE camps, is above *threshHighRelay* if configured; or | |
| | | 2> if the RSRP measurement of the Pcell, or the cell on which the UE camps, is below *threshLowRelay* if configured; | |
| | | | 3> consider the threshold conditions not to be met (leave); |

The threshold condition regarding the U2N relay and that regarding the MP relay may be different. That is, in an indirect path configured through a multi-path relay UE having a poor Uu link quality, transmission failures and retransmissions may occur frequently, adversely affecting the MP relay. Therefore, the lower threshold condition for determining whether to operate as a U2N relay UE, which may be configured by threshLowRelay and hystMinRelay, needs to be configured differently according to the channel situation in a multi-path relay. In addition, the U2N relay service is intended to provide extended coverage and stable DL/UL transmission through a relay service in case that the U2N remote UE and the base station 1320 have a poor Uu link quality. Accordingly, if the U2N relay UE has good coverage of threshHighRelay or higher with the base station 1320, the PC5 connection between the U2N relay UE and the U2N remote UE, which is expected to be far away from the base station 1320, may be poor. Therefore, in the case of a U2N relay, the U2N relay may not transmit/receive a discovery message in case that the U2N relay UE does not satisfy a threshold condition.

In addition, if the threshold condition for the U2N relay service and the threshold condition for the MP relay service are used identically, the MP remote UE may be unable to discover an MP relay UE that does not satisfy the threshold condition. In addition, unlike the U2N relay, in the case of the MP relay, even when the MP remote UE is in a good coverage area close to the base station 1320, increased stability (reliability) and bandwidth (throughput) may be provided through an additional indirect path. In addition, in the case of the MP relay, an enhanced service may be provided by using the MP relay even when both the MP relay UE and the MP remote UE are in a good coverage area close to the base station 1320. Therefore, there is a need to provide an extended service by allowing the UE to operate as an MP relay UE even in a good coverage state (i.e., a Uu link quality of threshHighRelay or higher) in which the U2N relay UE threshold condition is not satisfied. That is, a lower threshold condition for determining whether to operate as a U2N relay UE, which may be configured by threshLowRelay and hystMinRelay, and an upper threshold condition for determining whether to operate as a U2N relay UE, which may be configured by threshHighRelay and hystMaxRelay, may be configured and applied differently for the MP relay UE by the base station 1320, thereby solving the problem of the existing operation which may occur when a threshold condition for a U2N relay service and a threshold condition for an MP relay service are used identically.

A threshold applicable to an MP relay UE may be used/defined/constructed/configured as a different IE (for example, threshHighMPRelay, threshLowMPRelay, hystMaxMPRelay, hystMinMPRelay) to clarify that the threshold is used only in the MP relay and for example, may be used/defined/constructed/configured as in Table 3 below.

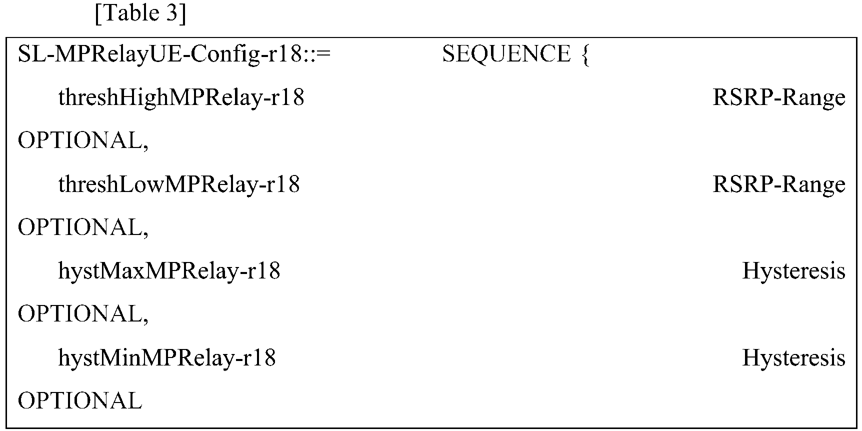

In order to configure and apply the threshold applied to the MP Relay UE, in case that the first UE 1310 supports the MP Relay UE operation and is in the RRC_CONNECTED state in which an RRC connection with the base station 1320 has been configured, the base station 1320 may configure the range of a threshold for discovery message transmission and/or reception operations of the first UE 1310 through an RRC message 1316 (for example, RRCReconfiguration). The threshold may include at least one of threshHighMPRelay, threshLowMPRelay, hystMaxMPRelay, and hystMinMPRelay (or may include at least one thereof). In case that the first UE 1310 supports the U2N MP relay UE operation and is in the RRC_IDLE or RRC_INACTIVE state in which no RRC connection to the base station 1320 is configured, the base station 1320 may configure the range of a threshold for discovery message transmission and/or reception operations of the first UE 1310 through an SIB message 1311 (for example, SIB12). The threshold included in the SIB may be configured by at least one of threshHighMPRelay, threshLowMPRelay, hystMaxMPRelay, and hystMinMPRelay (or may include at least one thereof).

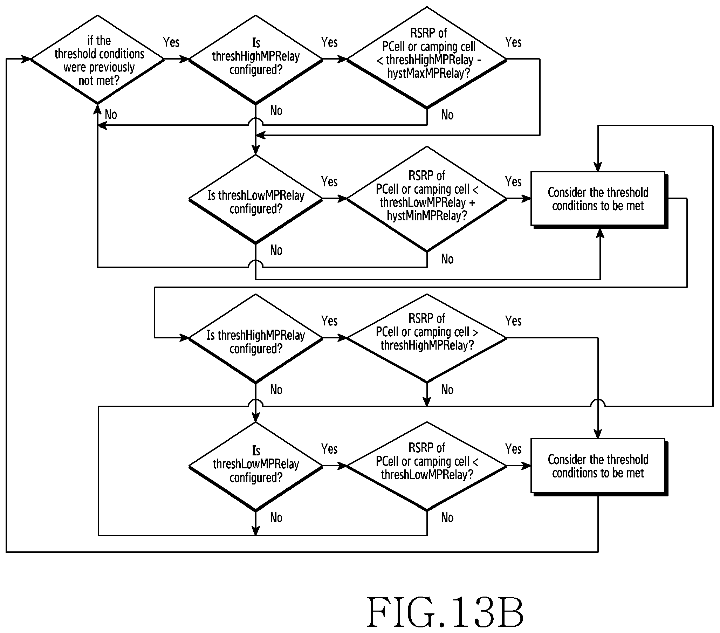

FIG. 13B is a flowchart illustrating a process in which a UE determines whether a multi-path UE-network relay threshold condition is satisfied according to an embodiment of the disclosure.

Referring to FIG. 13B, a UE supporting an MP relay may determine that a threshold condition for determining whether to operate as an MP relay UE is satisfied if a value obtained by measuring the RSRP of a serving cell, a primary cell, or a camping cell is lower (smaller) than a value obtained by subtracting hystMaxMPRelay from threshHighMPRelay, and if the value obtained by measuring the RSRP of a serving cell, a primary cell, or a camping cell is higher (larger) than a value obtained by adding hystMinMPRelay to threshLowMPRelay. In case that the threshold condition for determining whether to operate as an MP relay UE is satisfied, the UE may operate as an MP relay UE. In case that threshHighMPRelay or threshLowMPRelay is not configured, the UE supporting an MP relay UE may determine that the threshHighMPRelay or threshLowMPRelay condition for determining whether to always operate as an MP relay UE is satisfied.

In case that the MP relay threshold condition is satisfied, the UE supporting an MP relay may determine that the threshold condition for determining whether to operate as an MP relay UE is no longer satisfied if a value obtained by measuring the RSRP of a serving cell, a primary cell, or a camping cell is higher (or larger) than threshHighMPRelay, or if the value obtained by measuring the RSRP of a serving cell, a primary cell, or a camping cell is lower (or smaller) than threshLowMPRelay. In case that the threshold condition for determining whether to operate as an MP relay UE is not satisfied, the UE may not operate as an MP relay UE.

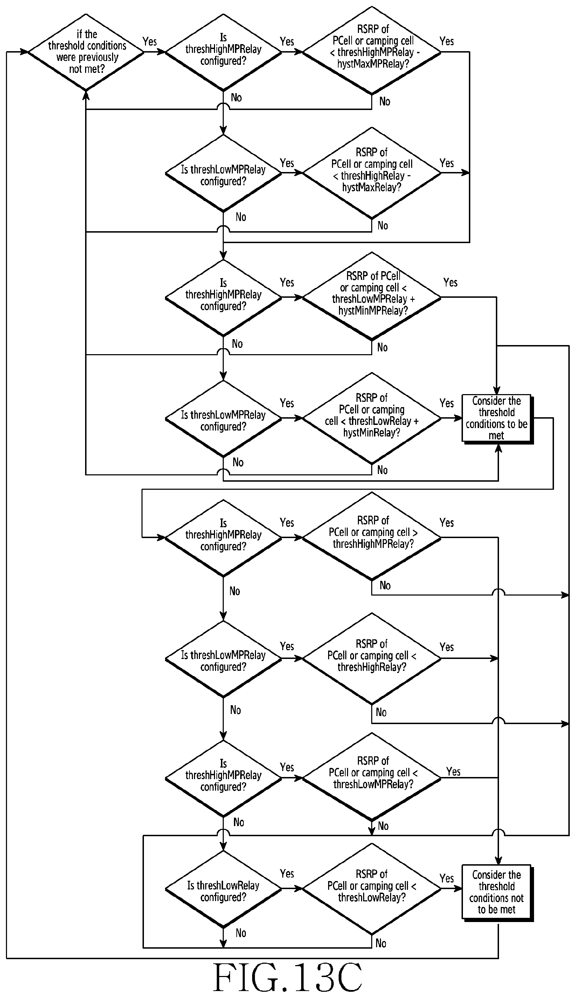

FIG. 13C is a flowchart illustrating a process in which a UE determines whether a threshold condition of a multi-path UE-network relay is satisfied according to an embodiment of the disclosure.

Referring to FIG. 13C, a UE supporting an MP relay may determine that a threshold condition for determining whether to operate as an MP relay UE is satisfied if a value obtained by measuring the RSRP of a serving cell, a primary cell, or a camping cell is lower (or smaller) than a value obtained by subtracting hystMaxMPRelay from threshHighMPRelay, or if the value obtained by measuring the RSRP of a serving cell, a primary cell, or a camping cell is higher (or larger) than a value obtained by adding hystMinMPRelay to threshLowMPRelay. In case that the threshold condition for determining whether to operate as an MP relay UE is satisfied, the UE may operate as an MP relay UE. In case that threshHighMPRelay or threshLowMPRelay is not configured, the UE supporting an MP relay UE may use threshHighRelay or threshLowRelay that is used to determine whether to operate as a U2N relay UE, instead of threshHighMPRelay or threshLowMPRelay, to determine a threshold condition for determining whether to operate as an MP relay UE and whether the same is satisfied. In case that threshHighMPRelay or threshLowMPRelay is not configured, and threshHighRelay or threshLowRelay is not configured, the UE supporting an MP relay UE may determine that threshHighRelay or threshLowRelay is satisfied always. In addition, in case that the MP relay threshold condition is satisfied, the UE supporting an MP relay UE may determine that, as the MP relay UE, the threshold condition is no longer satisfied if a value obtained by measuring the RSRP of a serving cell, a primary cell, or a camping cell is higher than (or greater than) threshHighMPRelay, or if the value obtained by measuring the RSRP of a serving cell, a primary cell, or a camping cell is lower than (or less than) threshLowMPRelay. In addition, in case that threshHighMPRelay or threshLowMPRelay is not configured, the UE supporting an MP relay UE may use threshHighRelay or threshLowRelay to determine whether the MP relay UE threshold is not satisfied.

In case that the MP relay UE threshold condition is not used (or in case that the MP relay UE threshold condition is not configured), the base station may indicate to the UE whether the UE satisfies the threshold by using the U2N relay UE threshold condition, through an RRC message or an SIB message.

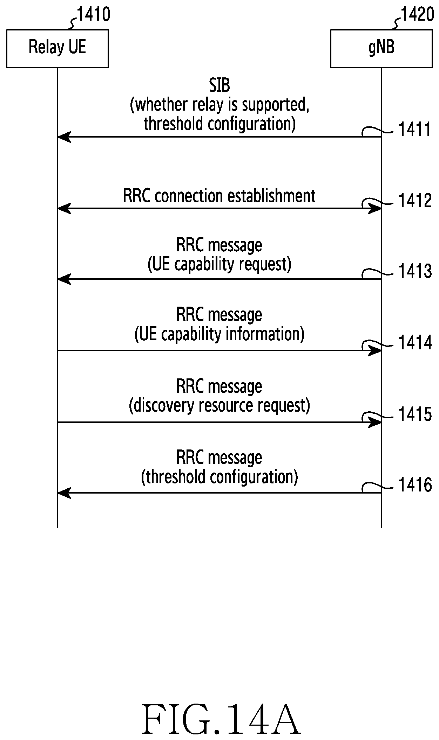

FIG. 14A is a diagram of a signal flow for transmitting a threshold condition of a multi-path UE network relay to a remote UE according to an embodiment of the disclosure.

Referring to FIG. 13A, the first UE 1410 may be located within the coverage of the base station 1420 (in-coverage (IC)) and may support a multi-path relay.

The base station 1420 may indicate whether a relay is supported in an SIB message (for example, SIB12), and in case that an indicator indicating relay support is included in the SIB message, the first UE 1410 may identify information indicating that the base station 1420 supports the relay. Information regarding whether the base station 1420 supports the relay may include L2 U2N relay, non-relay discovery, and L3 U2N relay discovery, and information regarding whether MP relay is supported may be transmitted in the form of true/false. In case that MP relay discovery message transmission is necessary, the first UE 1410 in the RRC_IDLE or RRC_INACTIVE state may perform a procedure 1412 for establishing an RRC connection to the base station 1420 supporting an L2 U2N relay and/or an MP relay.

The base station 1420 may request the first UE 1410 to provide capability information of the first UE 1410 through an RRC message 1413 (for example, UECapabilityEnquiry) in order to acquire capability information of the first UE 1410 in the RRC_CONNECTED state. The first UE 1410 may transmit an indicator including information indicating support for a sidelink relay of 3GPP Release 18 or an indicator including information indicating support for a multi-path relay to the base station 1420 through an RRC message 1414 (for example, UECapabilityInformation). Whether a multi-path relay is supported or a sidelink relay of Release 18 is supported may be differently indicate whether a relay or a remote UE's operation is supported. For example, the RRC message 1414 may be capability information indicating that the first UE 1410 supports a multi-path relay and is capable of operating as a relay UE of a multi-path relay. Through this message (RRC message 1414), the base station 1420 may know that the first UE 1410 supports multi-path relay. In addition, although not illustrated in the drawings, the access and mobility management function (AMF) may receive information regarding whether the L2 and/or L3 UE-network relay operations of the first UE 1410 are allowed, and whether the corresponding operation-specific relay and/or remote UE operation are allowed, from a unified data management (UDM) or a unified data repository (UDR), and may transmit the same to the base station 1420 via NGAP or the like.

In case that the first UE 1410 supports the MP remote UE operation and is in an RRC_CONNECTED state in which an RRC connection with the base station 1420 has been configured, the first UE 1410 may transmit an RRC message 1415 (e.g., SidelinkUEInformationNR) for requesting resources for transmitting/receiving a discovery message used in a multi-path relay to the base station 1420. This information may be transmitted as in Table 1 below.

In order to distinguish the purpose of the discovery transmission from that of the U2N relay, information (for example, mp-Relay) indicating that a multi-path relay discovery is transmitted may by the first UE 1410 be included in sl-DiscoveryType or a similar IE by the first UE 1410. In addition, a source L2ID used for discovery transmission by the MP remote UE may be included therein.

Upon receiving the RRC message transmitted by the first UE 1410, the base station 1420 may configure a resource and a threshold for transmitting/receiving a discovery message for a U2N relay and/or an MP relay for the first UE 1410 through an RRC message 1416 (e.g., RRCReconfiguration).

According to an embodiment of the disclosure, in case that the first UE 1410 supports a U2N relay UE operation and is in an RRC_CONNECTED state in which an RRC connection with the base station 1420 is configured, the base station 1420 may configure the range of a threshold for discovery message transmission and/or reception operations of the first UE 1410 through an RRC message 1416 (for example, RRCReconfiguration). The threshold may be configured by at least one of threshHighRemote and hystMaxRemote (or may include at least one thereof).

According to an embodiment of the disclosure, in case that the first UE 1410 supports a U2N relay UE operation and is in an RRC_IDLE or RRC_INACTIVE state in which no RRC connection with the base station 1420 is configured, the base station 1420 may configure the range of a threshold for discovery message transmission and/or reception operations of the first UE 1410 through an SIB message 1411 (e.g., SIB12). The threshold may be configured by at least one of threshHighRemote and hystMaxRemote (or may include at least one thereof). The first UE 1410 may determine that the first UE 1410 satisfies a threshold condition for determining whether to operate as a U2N remote UE, if a value obtained by measuring the RSRP of a serving cell, a primary cell, or a camping cell is lower (or smaller) than a value obtained by subtracting hystMaxRelay from threshHighRelay. Upon determining that the first UE 1410 satisfies the threshold condition, the first UE 1410 may operate as a U2N remote UE.

In addition, if the value obtained by measuring the RSRP of a serving cell, a primary cell, or a camping cell is higher (larger) than threshHighRemote, the first UE 1410 may determine that the first UE 1410 does not satisfy the threshold condition for determining whether the first UE 1410 is to operate as a U2N remote UE. Upon determining that the first UE 1410 does not satisfy the threshold condition, the first UE 1410 may not operate as a U2N remote UE. Such an operation may be illustrated as in Table 4 below.

**[Table 4]**

| | | | |
|---|---|---|---|
| A UE capable of NR sidelink U2N Remote UE operation shall: | | | |
| | 1>if the threshold conditions specified in this clause were previously not met: | | |
| | | 2> if *threshHighRemote* is not configured; or the RSRP measurement of the PCell, or the cell on which the UE camps, is below *threshHighRemote* by *hystMaxRemote* if configured, or | |
| | | 2> if the UE has no serving cell: | |
| | | | 3> consider the threshold conditions to be met (entry); |
| | 1> else: | | |
| | | 2> if the RSRP measurement of the PCell, or the cell on which the UE camps, is above *threshHighRemote* if configured: | |
| | | | 3> consider the threshold conditions not to be met (leave); |
| The L2 U2N Remote UE considers the cell indicated by *sl-ServingCellInfo* in the *SL-AccessInfo-L2U2N-r17* received from the connected L2 U2N Relay UE as the camping cell. | | | |

In order to provide the MP relay service smoothly, the Uu link quality of the MP remote UE may need to be good. That is, in a direct path where the Uu link quality is not good, frequent transmission failures and retransmissions may occur, which may adversely affect the MP relay. Therefore, the upper threshold condition for determining whether to operate as a U2N remote UE, which may be configured by threshHighRemote and hystMaxRemote, needs to be configured as a different value with regard to a multi-path relay.

In addition, in case that the U2N remote UE does not satisfy the threshold condition, that is, in case that the Uu link quality with the base station 1420 is good, the U2N remote UE may not transmit/receive a discovery message. Therefore, if the threshold condition for the U2N relay service and the threshold condition for the MP relay service are used identically, the MP remote UE may receive the MP relay service only in a situation in which the Uu link quality is poor, and may not be able to discover the MP relay UE in a situation in which the Uu link quality is good. In addition, unlike the U2N relay, an MP relay may provide reliability and throughput increased through an additional indirect path even if the MP remote UE is in a good coverage area close to the base station 1420. In addition, the MP relay may be used to provide an improved service even if both the MP relay UE and the MP remote UE are in a good coverage area close to the base station 1420. Therefore, even if a UE is in a good coverage state that does not satisfy the U2N remote UE threshold condition (i.e., Uu link quality equal to or higher than threshHighRemote), the UE needs to be allowed to operate as an MP remote UE in order to provide extended services. That is, the upper threshold condition for determining whether to operate as a U2N remote UE, which may be configured by threshHighRemote and hystMaxRemote, may be differently configured and applied for the MP remote UE, thereby solving the problem of existing operations that may occur when the threshold condition for the U2N remote UE and the threshold condition for the MP remote UE are used identically.

In addition, according to an embodiment of the disclosure, it is necessary to guarantee the minimum Uu link quality through the lower threshold condition. A threshold to be applied to the MP remote UE, which as upper/lower thresholds and corresponding hysteresis added thereto, may have an IE (e.g., threshHighMPRemote, threshLowMPRemote, hystMaxMPRemote, hystMinMPRemote) used/defined/constructed/configured to be different from the threshold applied to the existing U2N remote UE, in order to clearly indicate that the threshold is to be used only in the MP remote UE (not the U2N remote UE), and may be used/defined/constructed/configured as in Table 5 below.

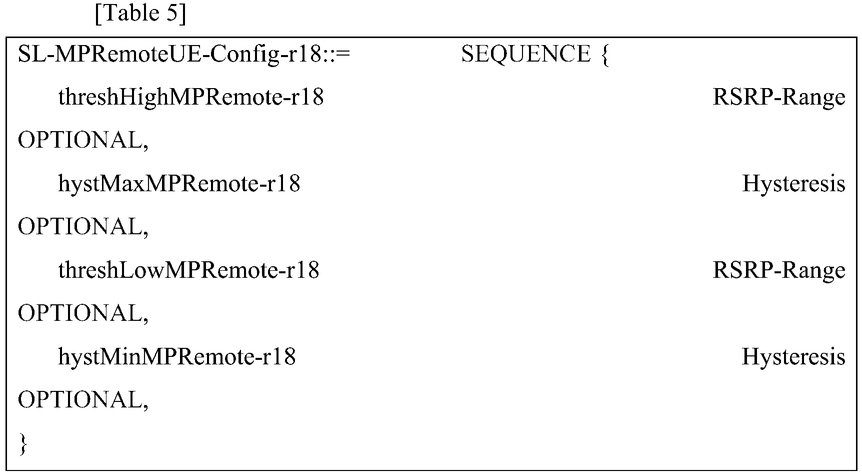

In order to configure and apply the threshold applied to the MP remote UE, in case that the first UE 1410 supports the MP remote UE operation and is in an RRC_CONNECTED state in which an RRC connection with the base station 1420 is configured, the base station 1420 may configure the range of a threshold for discovery message transmission and/or reception operations of the first UE 1410 through an RRC message 1416 (for example, RRCReconfiguration). The threshold may be configured by at least one of threshHighMPRemote, threshLowMPRemote, hystMaxMPRemote, and hystMinMPRemote (or may include at least one thereof). In case that the first UE 1410 supports the MP remote UE operation and is in an RRC_IDLE or RRC_INACTIVE state in which no RRC connection with the base station 1420 is configured, the base station 1420 may configure the range of a threshold for discovery message transmission and/or reception operations of the first UE 1410, through an SIB 1411 (e.g., SIB12). Upon receiving the SIB12, the first UE 1410 may apply the corresponding threshold, and the threshold may be configured by at least one of threshHighMPRemote, threshLowMPRemote, hystMaxMPRemote, and hystMinMPRemote (or may include at least one thereof).

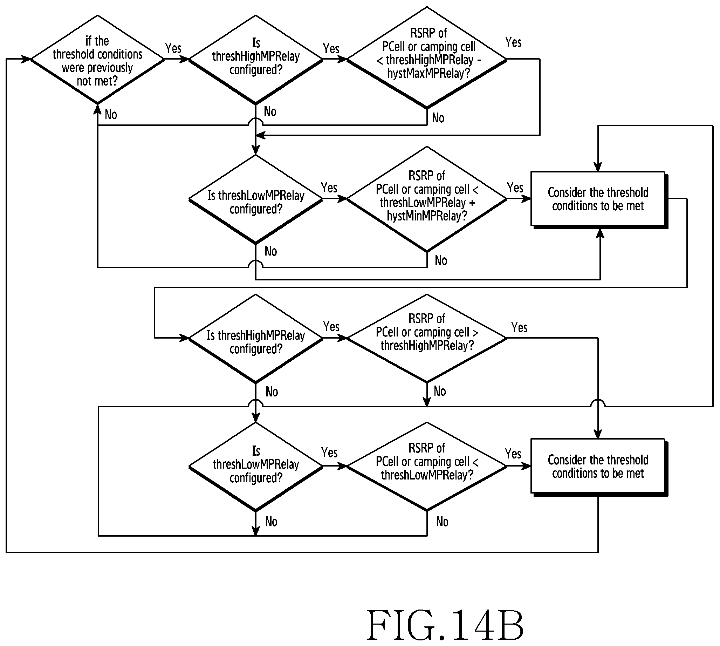

FIG. 14B is a flowchart illustrating a process in which a UE according to an embodiment of the disclosure determines whether a threshold condition of a multi-path UE-network relay is satisfied.

Referring to FIG. 14B, a UE supporting an MP Remote UE may determine that the UE satisfies a threshold condition for determining whether to operate as an MP remote UE if a value obtained by measuring the RSRP of a serving cell, a primary cell, or a camping cell is lower (smaller) than a value obtained by subtracting hystMaxMPRemote from threshHighMPRemote, or if the value obtained by measuring the RSRP is higher (larger) than a value obtained by adding hystMinMPRemote to threshLowMPRemote. In case that threshold condition for determining whether to operate as an MP remote UE is satisfied, the UE may operate as an MP remote UE. In addition, the UE that supports the MP remote UE may determine that the UE no longer satisfies the threshold condition for determining whether to operate as the MP remote UE if a value obtained by measuring the RSRP of a serving cell, a primary cell, or a camping cell is higher (or larger) than threshHighMPRemote, or if the RSRP of the serving cell, the primary cell, or the camping cell, measured by the UE that supports the MP remote UE, is lower (or smaller) than threshLowMPRemote. In case that the threshold condition for determining whether to operate as an MP remote UE is not satisfied, the UE may not operate as an MP remote UE. In addition, if threshHighMPRemote or threshLowMPRemote is not configured, the UE supporting the MP remote UE may determine that the threshHighMPRemote or threshLowMPRemote condition for determining whether to operate as an MP remote UE is satisfied by the UE always.

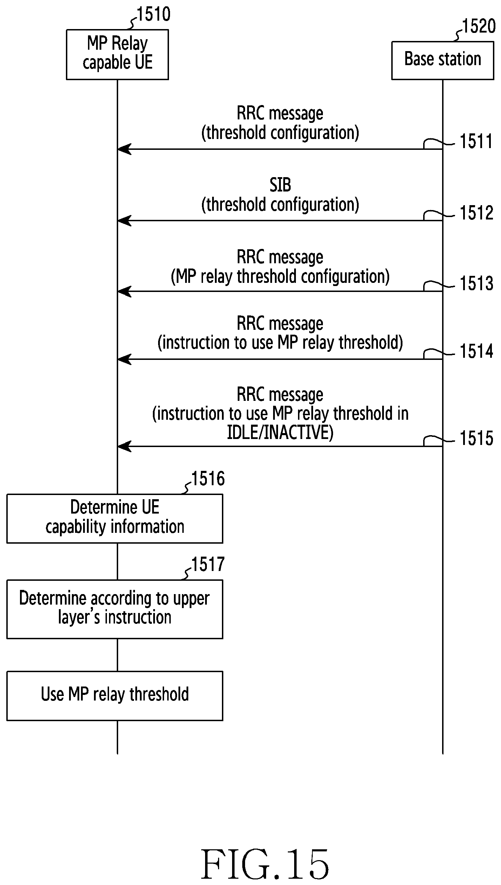

FIG. 15 is a flowchart illustrating a UE using a threshold for a multi-path UE-network relay operation according to an embodiment of the disclosure.

Referring to FIG. 15, the first UE 1510 may be located inside the coverage of the base station 1520 (in-coverage (IC)) and may support a multi-path relay. In case that the first UE 1510 is in an RRC_CONNECTED state, the same may follow configurations included in an RRC message (e.g., RRCReconfiguration) transmitted by the base station 1520. In addition, in case that the first UE 1510 is in an RRC_INACTIVE or RRC_IDLE state, the first UE 1510 may follow configurations included in an SIB message (for example, SIB12) transmitted by the base station 1520. The threshold applied to the MP relay for the MP relay UE or MP remote UE as described in FIG. 13A and FIG. 14A may also be transmitted to and used by the first UE 1510 by using different methods (for example, RRCReconfiguration or SIB12) according to the RRC state of the first UE 1510. In case that no threshold for determining whether to operate as an MP relay UE or an MP remote UE is configured, the UE may determine that the threshold condition is always satisfied, or may follow a threshold condition for determining whether to operate as a U2N relay UE or a U2N remote UE for determining whether to operate as an MP relay UE or an MP remote UE.

The first UE 1510 in the RRC_CONNECTED state may confirm/determine/decide/identify whether to operate an MP relay UE or an MP remote UE according to UE capability information which is held by the base station 1520 (information received from the first UE 1510 through UE capability information, or information received from the AMF), or which is held by the first UE 1510. In case that the threshold applied to the MP relay described with reference to FIG. 13A and FIG. 14A is not configured or not defined, the base station 1520 may configure a threshold applied to the U2N relay to be used by the first UE 1510 in an RRC_CONNECTED state as a threshold applied to the MP relay through an RRC message 1511. That is, at least one of threshHighRelay, threshLowRelay, hystMaxRelay, and hystMinRelay may be configured differently in case that the first UE 1510 is a U2N relay UE and in case that the first UE 1510 is an MP relay UE such that, without an explicit indication regarding the MP relay UE threshold to the first UE 1510, the first UE 1510 may replace the threshold to be used in relation to the MP relay UE operation with the U2N relay UE threshold and then use the same. In addition, in case that the first UE 1510 is an MP Remote UE, at least one of threshHighRemote and hystMaxRemote may be configured differently such that, without an explicit indication regarding the MP Remote UE threshold to the first UE 1510, the first UE 1510 may replace the threshold to be used in relation to the MP remote UE operation with the U2N remote UE threshold and then use the same.

In case that the threshold applied to the MP relay and the threshold applied to the U2N relay, described with reference to FIG. 13A and FIG. 14A, are both provided to the first UE 1510 through the RRC message 1511 or the SIB message 1512, the AS layer of the first UE 1510 may not clearly identify which value is to be used, among the MP relay and the threshold applied to the U2N relay, described with reference to FIG. 13A and FIG. 14A. The first UE 1510 may determine, through at least one of the following methods and configurations, that the first UE 1510 is to use the threshold applied to the MP relay.
- Supporting Release 18 SL relay
- Supporting Release 18 multi-path relay
- Capable of operating as a relay UE in Release 18 multi-path relay
- Capable of operating as a remote UE in Release 18 multi-path relay
- Configurating operations as a multi-path relay UE in the upper layer (e.g., ProSe layer)
- Configurating operations as a multi-path remote UE in the upper layer (e.g., ProSe layer)
- The base station 1520 configures a threshold applied to the MP relay in an RRC message
- The base station 1520 indicates an MP relay UE operation through an RRC message
- The base station 1520 indicates an MP remote UE operation through an RRC message

In case that the first UE 1510 is in an RRC_CONNECTED state, the base station 1520 may configure a threshold applied to the MP relay in an RRC message 1513. In case that the first UE 1510 identifies that the threshold used in the MP relay UE and/or the MP remote UE is included in the RRC message 1513, the first UE 1510 may determine whether the discovery transmission/reception condition is satisfied by using the MP relay threshold. Alternatively, the base station 1520 may directly instruct the first UE 1510 to operate as the MP relay UE and/or the MP remote UE through an RRC message 1514, and the first UE 1510 may operate as the MP relay UE and/or the MP remote UE until the corresponding configuration is released.

In case that the first UE 1510 is in the RRC_IDLE state or the RRC_INACTIVE state, the base station 1520 may include the MP relay threshold in an SIB 1512 (for example, SIB12) to indicate the MP relay threshold to unspecified multiple UEs including the first UE 1510 in the RRC_IDLE state or the RRC_INACTIVE state. The SIB may not include UE-specific configurations that apply only to a specific UE (e.g., the first UE 1510) among multiple unspecified UEs in the RRC_IDLE or RRC_INACTIVE state. Therefore, in order for a specific UE (e.g., first UE 1510) to use an MP relay threshold in an RRC_IDLE or

RRC_INACTIVE state, the base station 1520 may transmit, to the first UE 1510 in an RRC_CONNECTED state, an indicator instructing the same to use the MP relay threshold even in the RRC_IDLE or RRC_INACTIVE state, through an RRC message 1515 (e.g., RRCRelease). The indicator instructing use of the MP relay threshold even in the RRC_IDLE or RRC_INACTIVE state may explicitly indicate an MP relay UE or MP remote UE operation, or may be an MP relay or MP remote threshold to be used in RRC_IDLE or INACTIVE. Upon receiving the indicator, the first UE 1510 may use the MP relay threshold included in the SIB 1512 in RRC_IDLE or RRC_INACTIVE. The base station 1520 may indicate a configurable timer to the first UE 1510 together with the indicator, and the first UE 1510 may discontinue the use of an MP relay threshold according to a combination of at least one of the following: a change in the RRC state in RRC_IDLE or RRC_INACTIVE; deviation from the SI validity area; performing cell reselection; and timer expiration. In case that the base station 1520 does not indicate the MP relay UE or the MP remote UE to the first UE 1510 through an RRC message, the first UE 1510 may determine that an operation as an MP relay/remote UE is possible, based on the UE's capability information 1516 or a configuration 1517 of the upper layer (e.g., ProSe). In case that the base station 1520 includes a threshold to be used in the MP relay in an SIB 1512, the first UE 1510 may use the threshold for the MP relay/remote UE in the RRC_IDLE or RRC_INACTIVE state.

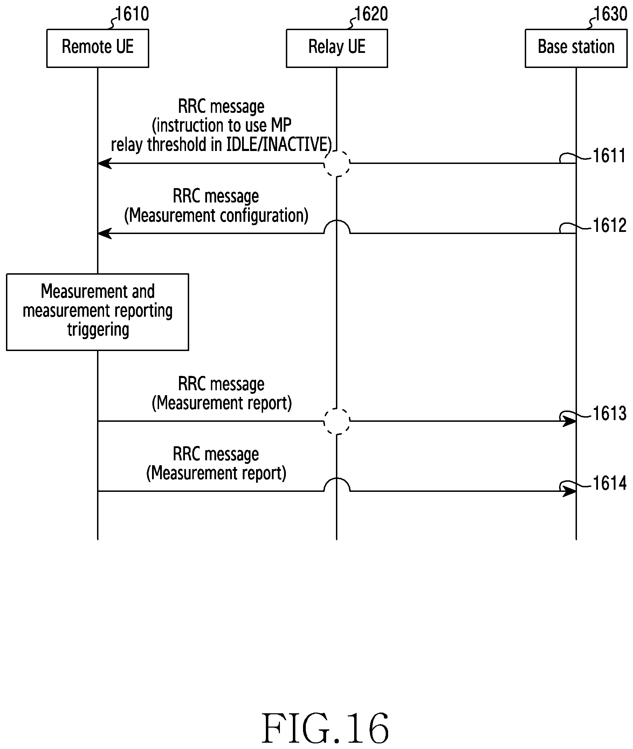

FIG. 16 is a flowchart illustrating a UE performing measurement and measurement reporting in a multi-path UE-network relay according to an embodiment of the disclosure.

Referring to FIG. 16, the first UE 1610 and the second UE 1620 may be within the coverage of the base station 1630 (in-coverage), and the first UE 1610 may operate as an MP remote UE, and the second UE 1620 may operate as an MP relay UE.

In order for the first UE 1610 to measure an L2 U2N relay UE or an L2 MP relay UE (e.g., the second UE 1620), the base station 1630 may configure a measurement configuration including an L2 U2N relay object for the first UE 1610, through an RRC message, on an indirect path 1611 or a direct path 1612. In case that an L2 U2N relay object is configured, the first UE 1610 performs measurement regarding a serving NR cell and a candidate L2 U2N relay UE and measurement result reporting (1613 and 1614). (For L2 U2N Relay object(s), the UE measures and reports on the serving NR cell(s), as well as the discovered L2 U2N Relay UEs.)

In case that the first UE 1610 and the second UE 1620, and the first UE 1610 and the base station 1630 are connected through an MP relay, the base station 1630 may configure the first UE 1610 to measure a candidate MP relay UE located near the first UE 1610, and may perform an indirect path switch, based on information of the candidate MP relay UEs included in the measurement result reported by the first UE 1610. The first UE 1610 needs to simultaneously measure and report not only the candidate MP relay UE but also the serving MP relay UE (i.e., the second UE 1620). Therefore, the base station 1630 may compare the link quality between the first UE 1610 and the serving MP relay UE and the link quality between the first UE 1610 and the candidate MP relay UE, reported from the first UE 1610, and may perform a related operation such as an indirect path change. In addition, in case that the U2N remote UE is capable of simultaneously measuring and transmitting the link quality with the serving L2 U2N relay UE and the link quality with the candidate U2N relay UE, the base station 1630 may perform a path switch operation, such as an indirect path switch. Therefore, in case that an L2 U2N relay object is configured for the first UE 1610, the first UE 1610 needs to perform measurement and measurement result reporting with regard to a serving NR cell, a serving relay UE, and a candidate L2 U2N relay UE. (That is, for L2 U2N Relay object(s), the UE measures and reports on the serving NR cell(s), serving Relay UE, as well as the discovered L2 U2N Relay UEs.)

The operation of the L2 MP remote UE performing a measurement with respect to the L2 MP relay UE and reporting the measurement result may be processed identically to the operation of the L2 U2N remote UE performing a measurement with respect to the L2 U2N relay UE and reporting the measurement result. That is, the L2 MP relay UE and L2 MP remote UE may be UEs capable of performing an MP relay operation among L2 U2N relay UEs, and may be UEs capable of performing an MP remote operation among L2 U2N remote UEs. In other words, among L2 U2N relay UEs, a UE capable of performing an MP relay operation may be an L2 MP relay UE, and among L2 U2N remote UEs, a UE capable of performing an MP remote operation may be an L2 MP remote UE. In another case, the L2 U2N relay UE and the L2 U2N remote UE and the L2 MP relay UE and the L2 MP remote UE may perform different operations such that operations not performed by the L2 U2N relay UE or the L2 U2N remote UE may be included in operations of the L2 MP relay UE or the L2 MP remote UE. Such operations may include operations of determining and using the MP relay UE threshold and the MP remote UE threshold described with reference to FIG. 13A, FIG. 14A, and FIG. 15.

In addition, operations 1613 and 1614 in which the first UE 1610 measures and reports with respect to the second UE 1620 (an indirect path) and the base station 1630 (a direct path) may be included in measurement and measurement reporting operations in the multi-path UE network relay. That is, the MP remote UE may include measurement results regarding the serving L2 MP relay UE and the serving NR cell(s) configured in servingCellMO, in the measurement report.

When the MP remote UE (e.g., the first UE 1610) reports a measurement result regarding the MP relay UE (e.g., the second UE 1620) to the base station 1630, the identifier of the PCell or camping cell of the MP relay UE, the L2ID used for sidelink discovery and/or sidelink communication transmitted by the MP relay UE, and results of measuring the corresponding sidelink signal may be included, and may be constructed/configured/defined as in Table 6 below.

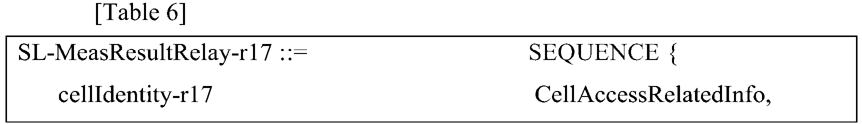

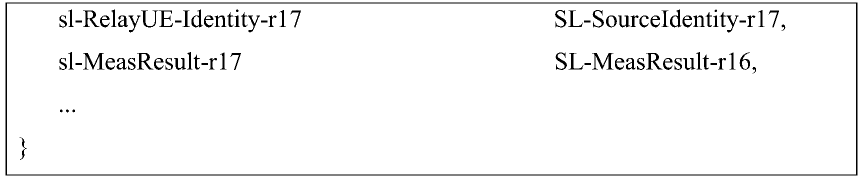

According to an embodiment of the disclosure, the MP relay may consider a scenario in which the MP remote UE (e.g., first UE 1610) and the MP relay UE (e.g., second UE 1620) are both served by the same base station 1630. In such a case, when measuring and reporting the serving relay UE, the first UE 1610 may not include the cell identifier because the PCell or camping cell of the first UE 1610 and the second UE 1620 is the same base station 1630 connected to the first UE 1610 and the second UE 1620, respectively, by a direct link. That is, cellIdentity in Table 6 above may not be transmitted.

According to an embodiment of the disclosure, in case that the first UE 1610 is performing an MP relay operation in which both the direct path and the indirect path are configured, the base station 1630 may instruct the first UE 1610 to discover and measure a candidate relay UE for the purpose of an indirect path change or the like. The PCell or camping cell of the candidate relay UE may be different from the PCell or camping cell of the first UE 1610. If this is the case, the candidate relay UE and the first UE 1610 may not be served by the same base station 1630, and therefore, the first UE 1610 may determine not to report a candidate relay UE that is not served by the PCell or camping cell of the first UE 1610.

In order to distinguish the reporting operation in the scenario in which both the MP remote UE (e.g., the first UE 1610) and the MP relay UE (e.g., the second UE 1620) are served by the same base station 1630, described above, and the reporting operation in the scenario in which the MP remote UE (e.g., the first UE 1610) and the MP relay UE (e.g., the second UE 1620) are served by different base stations 1630, the base station 1630 may separately indicate a L2 U2N relay measurement object and a L2 MP relay measurement object to the UE when indicating the reporting operation.

In addition, in case that the indirect path and the direct path are configured through different base stations 1630, cellIdentity may need to be included in the measurement report of the candidate relay UE. Therefore. cellIdentity in Table 6 may reported as needed (OPTIONAL) in consideration of the case in which paths are configured through different base stations 1630.

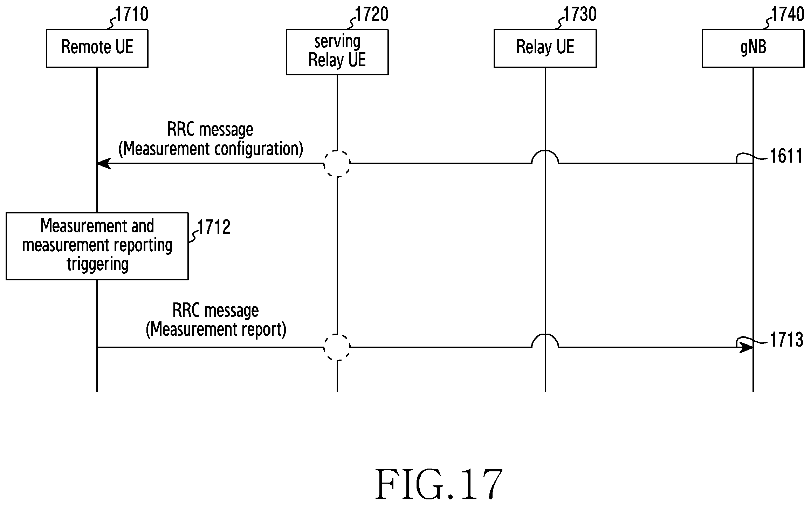

FIG. 17 is a flowchart of a UE performing measurement and measurement reporting in a multi-path UE-network relay according to an embodiment of the disclosure.

Referring to FIG. 17, the first UE 1710, the second UE 1720, and the third UE 1730 may be within the coverage of the base station 1740 (in-coverage), and the first UE 1710 may operate as an MP remote UE, and the second UE 1720 and the third UE 1730 may operate as MP relay UEs. The second UE 1720 may be a serving relay UE of the first UE 1710.

Referring to FIG. 17, the base station 1740 may configure the first UE 1710 to consider one or more of serving NR cell(s) and a serving relay UE, and a neighbor NR cell and a candidate relay UE simultaneously in connection with a measurement report triggering event. That is, in case that the first UE 1710 provides a U2N relay service with the base station 1740 through the second UE 1720, the base station 1740 may add a direct path, through which the first UE 1710 may directly communicate with the base station 1740, to the first UE 1710, thereby configuring (1711) a measurement report triggering event for identifying whether it is appropriate to provide an MP relay service, through the direct path. The measurement report triggering event may be satisfied when the link quality of the PC5 link between the first UE 1710 and the second UE 1720 is a PC5 link quality equal to or higher than a specific threshold. Alternatively, the measurement report triggering event may be satisfied when the link quality of the PC5 link between the first UE 1710 and the second UE 1720 is a PC5 link quality equal to or higher than a specific threshold, and the quality of the Uu link between the first UE 1710 and the base station 1740 is a Uu link quality equal to or higher than a specific threshold. The unit for the first UE 1710 to measure the signal strength of the second UE 1720 (i.e., the serving U2N relay) may be sidelink-reference signals received power (SL-RSRP) based on the signal strength of sidelink communication, or a sidelink discovery reference signals received power (SD-RSRP) based on the signal strength of a sidelink discovery message. The base station 1740 may separately specify/configure a unit to be used to measure the second UE 1720 with regard to each measurement report triggering event, for the first UE 1710, and may specify/configure one of SL-RSRP and SD-RSRP, or both SL-RSRP and SD-RSRP, as a measurement unit. The measurement unit may also be applied to a measurement report triggering event associated with the first UE 1710 and the second UE 1720, or a third UE 1730 not connected to the first UE 1710, or other UEs not illustrated in the drawings. Conditions of such a measurement report triggering event may be as follows.
- In case that the PC5 link quality between the remote UE and the serving relay UE is equal to or higher than the threshold
- In case that the PC5 link quality between the remote UE and the serving relay UE is equal to or higher than the threshold, and the Uu link quality between the remote UE and the NR cell is equal to or higher than the threshold

In case that the condition of the measurement report trigger event is satisfied (1712), the first UE 1710 may include a measurement result and additional information, which may include a serving cell, an NR cell, a serving relay UE, and a candidate relay UE, which are configured to be measured by the first UE 1710 through a measurement object, in a measurement report message. The measurement result may include one of SL-RSRP and SD-RSRP configured by the base station 1740, or both SL-RSRP and SD-RSRP. In order to match the measurement unit configured by the base station 1740 and the measurement unit reported by the first UE 1710, a configuration for explicitly indicating that the measurement result is SL-RSRP or SD-RSRP may be configured/constructed/defined as shown in Table 7 below.

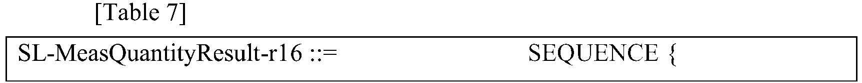

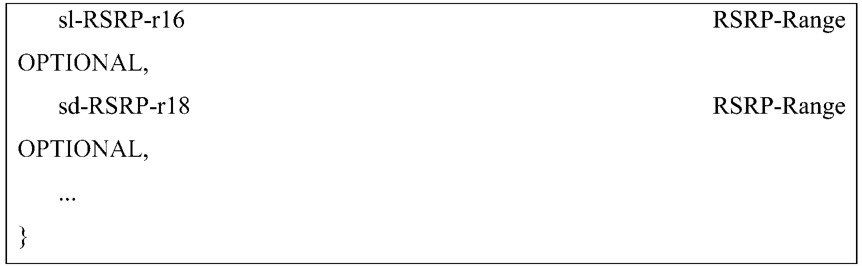

In case that the first UE 1710 is configured to measure and report a candidate relay UE that is not a serving relay UE, the measurement unit for the candidate relay UE may be different from the reporting unit for the serving relay UE. For example, in case that the first UE 1710 is configured to measure and report SL-RSRP for a candidate relay UE, but the serving relay UE of the first UE 1710 does not transmit sidelink data, it may not be possible to measure SL-RSRP with regard to the serving relay UE of the first UE 1710, and measurement of SD-RSRP may be solely possible through a sidelink discovery message regarding the serving relay UE of the first UE 1710. In such a case, a comparison between the PC5 link quality regarding the candidate relay UE and the PC5 link quality regarding serving relay UE may be difficult, and thus, even if the base station 1740 receives a measurement report, it may be difficult to manage the indirect path of the first UE 1710. Therefore, an explicit indication and reporting procedure regarding the measurement unit of the serving relay UE and the candidate relay UE measured by the first UE 1710 may be necessary. When the measurement result regarding the serving relay UE of the first UE 1710 is included in the measurement report of the first UE 1710, the measurement result may include SL-RSRP, and when there is no sidelink data transmission, the measurement result may include SD-RSRP. According to an embodiment of the disclosure, the first UE 1710 may measure candidate relay UEs in units of SL-RSRP or SD-RSRP, and the base station 1740 may configure a threshold regarding SL-RSRP and/or SD-RSRP. Even without explicitly configuring a measurement unit regarding the serving relay UE, the first UE 1710 may report (1713) a measurement result of the serving relay UE by using the same measurement unit as the unit configured for a measurement reporting triggering event for reporting a candidate relay UE (i.e., the measurement unit ReportConfig associated with the L2U2N Relay measurement object). For example, in case that the measurement report triggering condition of the configured candidate relay UE is SD-RSRP, the measurement report 1713, which is reported since the measurement report triggering condition of the configured candidate relay UE is satisfied, may include a result of measuring the SD-RSRP of the serving relay UE by the first UE 1710. Alternatively, at least one of the currently reportable measurement results regarding the serving relay UE, that is, SD-RSRP and SL-RSRP, may be included in the measurement report 1713.

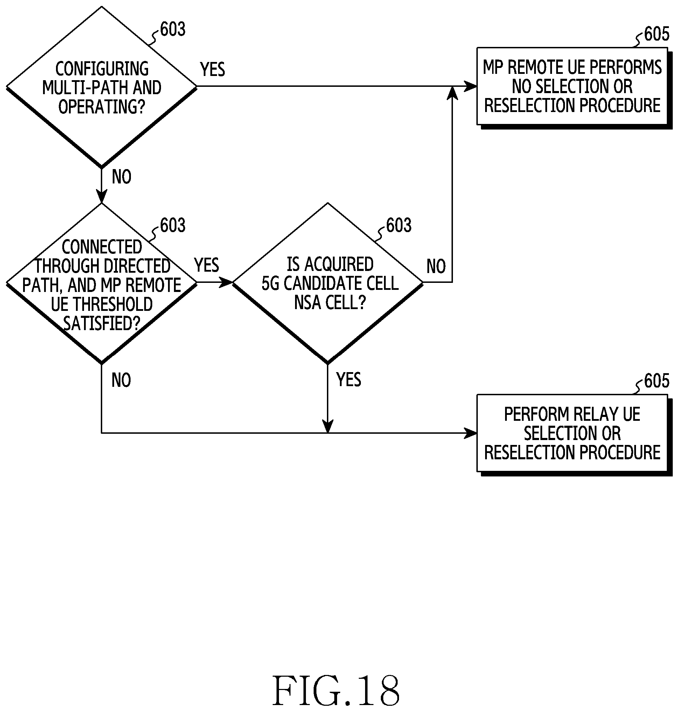

FIG. 18 is a flowchart illustrating a UE selecting or reselecting a relay UE during a multi-path UE-network relay operation according to an embodiment of the disclosure.

In case that the first UE operates as a U2N remote UE, the first UE may select or reselect a U2N relay UE to use a U2N relay service. The conditions for the first UE to select or reselect a U2N relay UE may include a case in which there is no serving cell of the first UE, a case in which the RSRP of the currently camped-on cell or PCell satisfies a threshold condition of a U2N remote UE, and no U2N Relay UE is selected, a case in which the SL-RSRP of the serving relay UE is worse than sl-RSRP-Thresh, a case in which the SL-RSRP of the serving relay UE is unavailable, a case in which the SD-RSRP of the serving relay UE is worse than sl-RSRP-Thresh, a case in which the upper layer has instructed not to use the serving relay UE, a case in which the upper layer has instructed to release the PC5-RRC connection with the serving relay UE, a case in which an RLF is detected in the sidelink with the serving relay UE, and the like. In case that at least one of the cases included in the conditions for the first UE to select or reselect a U2N relay UE, a discovery procedure for discovering a candidate relay UE may be performed. A candidate relay UE that satisfies the AS layer threshold (e.g., sl-RSRP-thresh), among discovered candidate relay UEs, may be considered as a selection target. Such a procedure may be exemplarily illustrated as in Table 8 below.

**[Table 8]**

| | | | |
|---|---|---|---|
| A UE capable of NR sidelink U2N Remote UE operation that is configured by upper layers to search for a NR sidelink U2N Relay UE shall: | | | |
| | 1> if the UE has no serving cell; or | | |
| | 1> if the RSRP measurement of the cell on which the UE camps (for L2 and | | |
| | L3 U2N Remote UE in RRC_IDLE or RRC_INACTIVE)/ the PCell (for L3 U2N Remote UE in RRC_CONNECTED) is below *threshHighRemote* within *sl-RemoteUE-Config:* | | |
| | | 2> if the UE does not have a selected NR sidelink U2N Relay UE; or | |
| | | 2> if the UE has a selected NR sidelink U2N Relay UE, and SL-RSRP of the currently selected NR sidelink U2N Relay UE is available and is below *sl-RSRP-Thresh;* or | |
| | | 2> if the UE has a selected NR sidelink U2N Relay UE, and SL-RSRP of the currently selected NR sidelink U2N Relay UE is not available, and SD-RSRP of the currently selected U2N Relay UE is below *sl-RSRP-Thresh;* or | |
| | | | NOTE 1: U2N Remote UE uses SL-RSRP measurements for relay reselection trigger evaluation when there is data transmission from U2N Relay UE to U2N Remote UE, and it is left to UE implementation whether to use SL-RSRP or SD-RSRP for relay reselection trigger evaluation in case of no data transmission from U2N Relay UE to U2N Remote UE. If SD-RSRP is used, the discovery procedure will be performed between the U2N Remote UE and the selected U2N Relay UE. |
| | | 2> if the UE has a selected NR sidelink U2N Relay UE, and upper layers indicate not to use the currently selected NR sidelink U2N Relay UE; or | |
| | | 2> if the UE has a selected NR sidelink U2N Relay UE, and upper layers request the release of the PC5-RRC connection; or | |
| | 2> if the UE has a selected NR sidelink U2N Relay UE, and sidelink radio link failure is detected on the PC5-RRC connection with the current U2N Relay UE as specified in clause 5.8.9.3: | | |
| | | 3> perform NR sidelink discovery procedure as specified in clause 5.8.13 in order to search for candidate NR sidelink U2N Relay UEs; | |
| | | | 4> when evaluating the one or more detected NR sidelink U2N Relay UEs, apply layer 3 filtering as specified in 5.5.3.2 across measurements that concern the same U2N Relay UE ID and using the *sl-FilterCoefficientRSRP* in *SIB12* (if in RRC_IDLE/INACTIVE), the *sl-FilterCoefficientRSRP* in *sl-ConfigDedicatedNR* (if in RRC_CONNECTED) or the preconfigured *sl-FilterCoefficientRSRP* as defined in 9.3 (out of coverage), before using the SD-RSRP measurement results; |
| | | | 4> consider a candidate NR sidelink U2N Relay UE for which SD-RSRP exceeds *sl-RSPP-Thresh* by *sl-HystMin* has met the AS criteria; |
| | | 3> if the UE detects any suitable NR sidelink U2N Relay UE(s): | |
| | | | 4> consider one of the available suitable NR sidelink U2N relay UE(s) can be selected; |

Unlike the U2N relay, the selection or reselection of the MP relay UE for the first UE's MP relay service may be performed by the base station. That is, instead of performing the selection or reselection of an MP Relay UE, the first UE performs a procedure of measuring a candidate MP Relay UE and reporting the measurement result to the base station. Through such a procedure, the base station that has received the candidate MP relay UE from the first UE may select an MP relay UE to be used in the indirect path.

In order to prevent the MP remote UE from selecting or reselecting the MP relay UE, the UE may not select or reselect a relay UE in at least one of the following cases.
- A UE that is configured as an MP remote UE and is operating accordingly, that is, a UE for which a direct path and an indirect path are configured, does not select or reselect an MP relay UE.
- Among UEs communicating through a direct path, a UE that satisfies the MP remote UE threshold condition does not select or reselect an MP relay UE. In case that the U2N remote UE threshold condition is also satisfied, the condition for selection or reselection of the U2N remote UE may be followed.

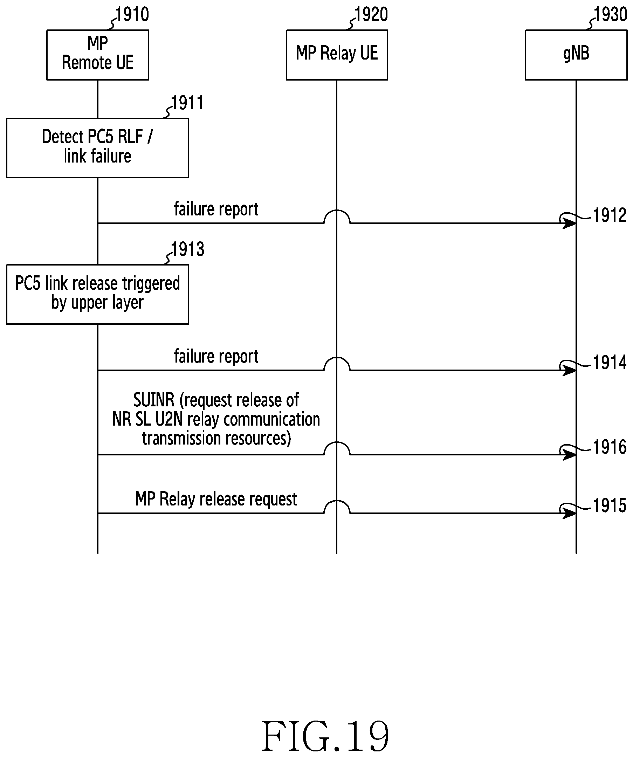

FIG. 19 is a flowchart illustrating a UE reporting an indirect path failure to a base station during a multi-path UE-network relay operation according to an embodiment of the disclosure.

Referring to FIG. 19, the first UE 1910 and the second UE 1920 may be within the coverage of the base station 1930 (in-coverage), and the first UE 1910 may operate as an MP remote UE, and the second UE 1920 may operate as an MP relay UE. The first UE 1910 may be in the middle of an MP relay operation in which both an indirect path through the second UE 1920 and a direct path through the base station 1930 are configured.

In case that the first UE 1910 detects (1911) a PC5 RLF or link failure in a connection with the second UE, the first UE 1910 may notify the base station 1930 of an indirect path failure report through a direct link by using an RRC message 1912. The PC5 RLF may be detected if at least one of the following conditions is satisfied; a case in which a specified number of RLC retransmissions regarding a specific target has occurred; a case in which a T400 timer regarding a specific target has expired; a case in which a specified number of HARQ DRXs regarding a specific target has occurred; or a case in which the integrity check of SL-SRB2 or SL-SRB3 regarding a specific target has failed. In addition, in case that a radio access technology other than 3GPP is used, a link failure may be detected by a detection method of the radio access technology.

In addition to the case in which the first UE 1910 detects a PC5 RLF and a link failure with regard to the second UE 1920, the first UE 1910 may discontinue the connection with the second UE 1920 by the upper layer. For example, the upper layer of the first UE 1910 may issue an instruction 1913 to release the PC5-RRC connection with the second UE 1920. In addition, the upper layer of the first UE 1910 may issue an instruction 1913 such that no MP relay is used any longer with the second UE 1920. In this case, the first UE 1910 may not transmit an indirect path failure report to the base station 1930 because no PC5 RLF or link failure has occurred, and accordingly, the base station 1930 may not clearly know for what reason the connection between the first UE 1910 and the second UE 1920 has terminated. Therefore, in case that the first UE 1910 has terminated the PC5-RRC by the upper layer or is no longer using the second UE 1920 as an MP relay UE (1913), a method for the first UE 1910 to inform the base station 1930 thereof may be necessary.

According to an embodiment of the disclosure, the first UE 1910 may use an indirect path failure report 1914, and the indirect path failure report 1914 may be transmitted to the base station 1930 using an indirect path or a direct path. The message 1914 may include an indicator for informing the base station 1930 of the fact that the upper layer has requested PC5-RRC release, or the fact that an instruction to no longer use the second UE 1920 has been transmitted, and may include an identifier (e.g., L2ID) for identifying the second UE 1920, and an identifier of the second UE's serving cell, PCell, and camping cell.

According to an embodiment of the disclosure, in another method, the first UE 1910 may transmit an RRC message 1915 (e.g., sidelinkUEInformationNR) to the base station 1930 using an indirect path or a direct path such that the base station 1930 is no longer requested to provide resources for communicating with the second UE 1920. This message 1915 may include an identifier (e.g., L2ID) for identifying the second UE 1920, and an identifier of the serving cell, PCell, or camping cell of the second UE. The base station 1930 may identify that the first UE 1910 is not continuing communication with the second UE 1920, based on the first UE 1910 not requesting resources for communicating with the second UE 1920.

According to an embodiment of the disclosure, in another method, the first UE 1910 may transmit, to the base station 1930 using an indirect path or a direct path, an RRC message 1916 (e.g., sidelinkUEInformationNR) including information indicating that the first UE 1910 no longer communicates with the second UE 1920. The message 1916 may include an identifier (for example, L2ID) for identifying the second UE 1920, and an identifier of the serving cell, PCell, or camping cell of the second UE. By including such information, the base station 1930 may efficiently utilize resources through management such as releasing an indirect path that may no longer be used.

Methods disclosed in the claims or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

The embodiments of the disclosure described and shown in the specification and the drawings are merely specific examples that have been presented to easily explain the technical contents of the disclosure and help understanding of the disclosure, and are not intended to limit the scope of the disclosure. That is, it will be apparent to those skilled in the art that other variants based on the technical idea of the disclosure may be implemented. Also, the above respective embodiments may be employed in combination, as necessary. For example, a part of one embodiment of the disclosure may be combined with a part of another embodiment to operate a base station and a terminal. As an example, a part of a first embodiment of the disclosure may be combined with a part of a second embodiment to operate a base station and a terminal. Moreover, although the above embodiments have been described based on the FDD LTE system, other variants based on the technical idea of the embodiments may also be implemented in other communication systems such as TDD LTE, and 5G, or NR systems.

In the drawings in which methods of the disclosure are described, the order of the description does not always correspond to the order in which steps are performed, and the order relationship between the steps may be changed or the steps may be performed in parallel.

Alternatively, in the drawings in which methods of the disclosure are described, some elements may be omitted and only some elements may be included therein without departing from the essential spirit and scope of the disclosure.

In addition, in methods of the disclosure, some or all of the contents of each embodiment may be implemented in combination without departing from the essential spirit and scope of the disclosure.

Various embodiments of the disclosure have been described above. The above description of the disclosure is for the purpose of illustration, and is not intended to limit embodiments of the disclosure to the embodiments set forth herein. Those skilled in the art will appreciate that other specific modifications and changes may be easily made to the forms of the disclosure without changing the technical idea or essential features of the disclosure. The scope of the disclosure is defined by the appended claims, rather than the above detailed description, and the scope of the disclosure should be construed to include all changes or modifications derived from the meaning and scope of the claims and equivalents thereof.

## Claims

1. A method performed by a first terminal in a wireless communication system, the method comprising:
receiving, from a second terminal, a signal for measurement regarding a sidelink with the second terminal; and
transmitting, to the second terminal or a base station, a measurement report comprising a result of the measurement based on the signal,
wherein the measurement report comprises information indicating a measurement unit based on which the result of the measurement is based.

2. The method of claim 1, wherein the information indicating the measurement unit indicates one of sidelink-reference signals received power (SL-RSRP) or sidelink discovery reference signals received power (SD-RSRP).

3. The method of claim 2, wherein the result of the measurement comprises a measurement result based on the SL-RSRP or a measurement result based on the SD-RSRP.

4. The method of claim 2, wherein no separate configuration regarding the measurement unit is configured for the first terminal.

5. A method performed by a second terminal in a wireless communication system, the method comprising:
transmitting, to a first terminal, a signal for measurement regarding a sidelink with the first terminal; and
receiving, from the first terminal, a measurement report comprising a result of the measurement based on the signal,
wherein the measurement report comprises information indicating a measurement unit on which the result of the measurement is based.

6. The method of claim 5, wherein the information indicating the measurement unit indicates one of sidelink-reference signals received power (SL-RSRP) or sidelink discovery reference signals received power (SD-RSRP).

7. The method of claim 6, wherein the result of the measurement comprises a measurement result based on the SL-RSRP or a measurement result based on the SD-RSRP.

8. The method of claim 6, wherein no separate configuration regarding the measurement unit is configured for the first terminal.

9. A first terminal in a wireless communication system, the first terminal comprising:
a transceiver; and
a controller connected to the transceiver,
wherein the controller is configured to:
receive, from a second terminal, a signal for measurement regarding a sidelink with the second terminal; and
transmit, to the second terminal or a base station, a measurement report comprising a result of the measurement based on the signal,
wherein the measurement report comprises information indicating a measurement unit based on which the result of the measurement is based.

10. The first terminal of claim 9, wherein the information indicating the measurement unit indicates one of sidelink-reference signals received power (SL-RSRP) or sidelink discovery reference signals received power (SD-RSRP).

11. The first terminal of claim 10, wherein the result of the measurement comprises a measurement result based on the SL-RSRP or a measurement result based on the SD-RSRP.

12. The first terminal of claim 10, wherein no separate configuration regarding the measurement unit is configured for the first terminal.

13. A second terminal in a wireless communication system, the second terminal comprising:
a transceiver; and
a controller connected to the transceiver,
wherein the controller is configured to:
transmit, to a first terminal, a signal for measurement regarding a sidelink with the first terminal; and
receive, from the first terminal, a measurement report comprising a result of the measurement based on the signal,
wherein the measurement report comprises information indicating a measurement unit on which the result of the measurement is based.

14. The second terminal of claim 13, wherein the information indicating the measurement unit indicates one of sidelink-reference signals received power (SL-RSRP) or sidelink discovery reference signals received power (SD-RSRP).

15. **16.** The second terminal of claim 14, wherein the result of the measurement comprises a measurement result based on the SL-RSRP or a measurement result based on the SD-RSRP.
